# EUROPEAN PATENT SPECIFICATION

(11) **EP 2 415 207 B1**
(45) Date of publication and mention of the grant of the patent: **03.12.2014**
(21) Application number: 10762104.7
(22) Date of filing: 24.03.2010
(51) Int. Cl.: H04L 12/22, H04L 12/26, H04L 12/28

(54) **SYSTEM AND METHOD FOR ACCESS MANAGEMENT AND SECURITY PROTECTION FOR NETWORK ACCESSIBLE COMPUTER SERVICES**
SYSTEM UND VERFAHREN FÜR ZUGRIFFSVERWALTUNG UND SICHERHEITSSCHUTZ FÜR COMPUTERDIENSTE MIT NETZWERKZUGRIFF
SYSTÈME ET PROCÉDÉ DESTINÉS À UNE GESTION D'ACCÈS ET À UNE PROTECTION DE SÉCURITÉ POUR DES SERVICES INFORMATIQUES ACCESSIBLES EN RÉSEAU

(30) Priority: 31.03.2009 US 165250 P
(43) Date of publication of application: 08.02.2012
(73) Proprietor: Wei, Coach, Cambridge, MA 02141 (US)
(72) Inventor: WEI, Coach, Cambridge, MA 02141 (US); BUFFONE, Robert, Wakefield, MA 01880 (US); STATA, Raymond, Dover, MA 02030 (US)
(74) Representative: Hellmich, Wolfgang
(86) International application number: PCT/US2010/028388
(87) International publication number: WO 2010/117623

(56) References cited:
- US-A1- 2002 009 079
- US-A1- 2007 261 112
- US-A1- 2008 229 415
- US-A1- 2008 282 338

## Description

### Field of the Invention

The present invention relates to Internet security, and more particularly, to a system and a method for access management and security protection for network accessible computer services according to the preamble part of claim 1. Such a method is disclosed in US 2002/009079 A1.

### Background of the Invention

Since the early days of linking computers together to form a computer network, computer networks have grown more and more important and have become one of the fundamental infrastructural foundations of our society. Typical networks include the Internet, various Local Area Networks (LAN), wireless networks, mobile networks, Virtual Private Network (VPN), among others. A lot of networked computers are programmed to provide some kind of service that can be used by other networked entities. In general, a networked computer that provides a network accessible service is referred to as a "server" and a program that consumes such a service is referred to as a "client". Sometimes the term "client" is also used to refer to the computer or device that runs such a client program.

US 2002/009079 A1 teaches an apparatus and method for enhancing the infrastructure of a network such as the Internet is disclosed. A packet interceptor/processor apparatus is coupled with the network so as to be able to intercept and process packets flowing over the network. Further, the apparatus provides external connectivity to other devices that wish to intercept packets as well. The network facilitates content delivery and network security.

There are many types of network accessible computer services. Web applications are the best known examples of such services. A web application (also referred to as a "web site") is a network accessible computer service that runs on a web server for responding to Hypertext Transport Protocol (HTTP) requests. Depending on how the web application is programmed, the service may be serving HTML documents, processing an e-commerce transaction or performing a search query, among others.

Clients are typically web browsers who issue HTTP requests to such a web server. The web server processes these HTTP requests and sends back the result to the client web browser. The client web browser may in turn display the result to the end user.

Another example of a networked computer service is a web service. A web service is a network accessible computer service running on a web service server and is typically accessible via HTTP-based protocol, Simple Object Access Protocol (SOAP) or Representational State Transfer (REST) protocol. However, unlike a web application that is typically designed to serve a human being (via a client side graphic user interface such as a web browser), a web service is typically designed to serve other computers or devices. For example, most airlines provide web services for other businesses such as travel web sites to perform air fare query, booking, checking flight status and so on.

Other examples of network computer services include email server, File Transfer Protocol (FTP) server, Instant Messaging server and steaming media server, among others.

Networked computer services are accessible by anyone using the associated network protocol. For example, anyone can use the Hypertext Transport Protocol (HTTP) to access a web application, SOAP or REST for web services, Simple Mail Transfer Protocol (SMTP) or Post Office Protocol (POP) for email services, FTP for FTP services and so on. This "open accessibility" is a double edged sword. It enables tremendous flexibility and facilitates innovation. However, it also introduces access management and security protection challenges.

Access management is a fundamental requirement for the operation of many network services. Most network services need a mechanism to decide and control who can access the service. Access management is not only about preventing unwanted access, but also about access rules and polices. For example, web applications may set up the following rules or policies:
a. Protocol throttling, i.e., certain services must be accessed via a specific protocol. For example, it is common for web applications to require Hypertext Transfer Protocol Secure (HTTPS) protocol for submitting user authentication data. If a client submits such data via HTTP protocol, the application may show a warning or reject such submission;
b. Client throttling, i.e., only certain clients are allowed to access some of the services. In one example, some of the functionality of a web site may be accessible to clients within the United States of America only. In another example, some of the services can be accessed only if the client has logged in. In another example, some of the services are only available to clients using certain kind of browsers or mobile devices.
c. Geographical targeting: A web site may want to target clients from different geographies and serve different content to different geographies, such as serving an English page to visitors from US and serving a Chinese page to visitors from China.
d. A/B Testing: A/B testing is a common technique used by web developers or marketers to figure out the best approach by comparing the results from showing different approaches to users. Web marketers may want to show "page A" to a certain group of users and "page B" to a different group of users to decide which page has better appeal.
e. Rate throttling: Some web applications would like to limit the "rate" of access from each particular client. Otherwise some of the clients may "abuse" the services by sending out frequent requests.
f. Access logging and auditing: most applications require logging of client access requests for purposes such as monitoring or auditing.
g. Request pre-processing: some applications would benefit from request pre-processing, such as checking the validity of the request, transforming the request data into a canonical form, or decrypting encrypted requests.

Further, for a wide variety of networked computer services, information traveling on the network usually takes a circuitous route through several intermediary nodes to reach any destination node. Hackers exploit the various aspects and/or holes in the Internet architecture for malicious purposes. This is where network security comes in and why it has become a rapidly growing concern for all who use the Internet. Some common Internet security issues include the following:
a. Denial of service attack: this attack inundates a server with an overwhelming amount of requests and causes the server to slow to a crawl or eventually crash;
b. E-mail bombs: an e-mail bomb is usually a personal attack. Someone sends to a recipient the same e-mail hundreds or thousands of times until the recipient's e-mail system cannot accept any more messages;
c. Viruses: probably the most well known threat is computer viruses. A virus is a small program that can copy itself to other computers and in this way it can spread quickly from one system to the next. Viruses range from harmless messages to those that would do serious damages such as erasing all the data;
d. Spam: typically harmless but always annoying. Spam is the electronic equivalent of junk mail;
e. Redirect bombs: Hackers can use Internet Control Message Protocol (ICMP), to change (redirect) the path a message travels by sending it to a different router. This is one of the ways that a denial of service attack is set up;
f. Worm: a worm is more or less a Virus except that it can distribute itself as an email by using email addresses it finds on the computer. In other words, it can find your friend's email address (on your computer) and then send them a virus infected email;
g. Spyware: Spyware is software that is downloaded onto the computer without a user's knowledge. Spyware normally has permission to be on the computer because the user either agreed to a license agreement before the download (i.e. a website download agreement) or to the software installation license agreement. Spyware can be given permission in other ways though, depending on security settings and so on. Once installed and activated, spyware collects information about the user and computer activities for various exploits and may bombard the user with pop-up advertisements;
h. Phishing: phishing is the criminally fraudulent process of attempting to acquire sensitive information such as usernames, passwords and credit card details by masquerading as a trustworthy entity in an electronic communication. Communications purporting to be from popular social web sites (YouTube, Facebook, MySpace, and Windows Live Messenger), auction sites (eBay), online banks (Wells Fargo, Bank of America), online payment processors (PayPal), or IT Administrators (Yahoo, ISPs, corporate) are commonly used to lure the unsuspecting users. Phishing is typically carried out by e-mail or instant messaging, and it often directs users to enter sensitive information at a fake website whose look and feel are almost identical to the legitimate one;
i. Trojan Horse: A Trojan Horse is a program that masquerades as another common program in an attempt to steal information. An example of a Trojan horse is a program that behaves like a Log-On program to retrieve a user typed-in username and password information. The user logs on as normal, because the Trojan horse log-on screen looks the same as the real log-on screen, but later on the Trojan horse sends the username and password details over the internet to the Trojan programmer's computer, which can be used to break into the user's computer at a later time;

Besides the above mentioned generic attacks, additional common attacks specific to web applications include the following:
A. Information Gathering Attacks
   - Directory Scanning Attack - An attempt to discover the file structure of a web site in preparation for further attacks
   - Link Crawl Attack - Traversing application links attempting to discover the structure of the application
   - Path Truncation Attack - Examining directory listings by removing the filename portion of the Uniform Source Locator (URL)
   - Common Gateway Interface (CGI) Scanning Attack - Scanning and traversing URLs and web links in an attempt to find executable scripts or programs on a web server.
   - File System Scanning Attack - Scan the local file system to match its structure and detect vulnerable files.
   - Password Cracking Attack - Brute force password guessing
B. Injection Attacks
   - Global Variable Injection Attack - Use parameters to inject arbitrary values into uninitialized global variables in a server side script such as PHP script;
   - Remote File Injection Attack - Convince a Hypertext Preprocessor (PHP )script to use a remote file instead of a presumably trusted file from the local file system.
   - Structured Query Language (SQL) Injection Attack - Attempt to get the database server to execute arbitrary SQL.
   - Email Injection Attack - Attempt to get the program to send arbitrary emails.
   - Command Injection Attack - Attempt to execute shell commands.
   - Code Injection Attack - Attempt to execute arbitrary PHP code.
   - Cross Site Scripting Attack - Attempt to coerce the program to outputting third party JavaScript.
   - Cookie Tampering Attack - Attempt to manipulate an application's cookie values.
   - Parameter Manipulation Attack - Attempt to manipulate input to application validation and filtering.
   - Globally Writable File Attack - File based input can be injected into other applications.

The above attacks are merely examples of some of the common security attacks. Such security issues can be serious threat to not only web applications, but also web services, email applications, or any other Internet-based applications.

Over the recent years, cloud computing has emerged as an efficient and flexible way to do computing. According to Wikipedia, cloud computing "refers to the use of Internet-based (i.e. Cloud) computer technology for a variety of services. It is a style of computing in which dynamically scalable and often virtualized resources are provided as a service over the Internet. Users need not have knowledge of, expertise in, or control over the technology infrastructure 'in the cloud' that supports them". The word "cloud" is a metaphor, based on how it is depicted in computer network diagrams, and is an abstraction for the complex infrastructure it conceals. In this document, we use the term "Cloud Computing" to refer to the utilization of a network-based computing infrastructure that includes many inter-connected computing nodes to provide a certain type of service, of which each node may employ technologies like virtualization and web services. The internal works of the cloud itself are concealed from the user point of view.

An enabler for cloud computing is virtualization. Wikipedia explains that "virtualization is a broad term that refers to the abstraction of computer resource". It includes "Platform virtualization, which separates an operating system from the underlying platform resources", "Resource virtualization, the virtualization of specific system resources, such as storage volumes, name spaces, and network resource" and so on. Due to virtualization, one can automate the tasks of starting, stopping and managing "virtual machine" (VM) nodes in a computing environment. Each "virtual machine" behaves just like a regular computer from an external point of view. One can install software onto it, delete files from it and run programs on it, among others, though the "virtual machine" itself is just a software program running on a "real" computer.

Based on virtualization, many vendors are offering "computing infrastructure as a service". Various vendors are providing cloud computing infrastructure to customers using a "pay as you go and pay for what you use" model, including Amazon.com's Elastic Computing Cloud (EC2), RackSpace Cloud, GoGrid, SoftLayer, Sawis, Fujitsu, Joyent, and FlexiScale. These cloud infrastructures provide ways for a customer to dynamically start new virtual machine nodes or shut down existing virtual machine nodes in a matter of a few minutes. The cloud computing business model and elastic nature of virtual machine nodes provide new perspectives on how problems can be solved.

Prior art approaches of access management and security protection for networked computer services are primarily "in the data center" approaches using specialized appliances or custom coding. These approaches require adding special hardware or software in front of the servers on which the network service runs, typically inside the data center where the server machines are deployed.

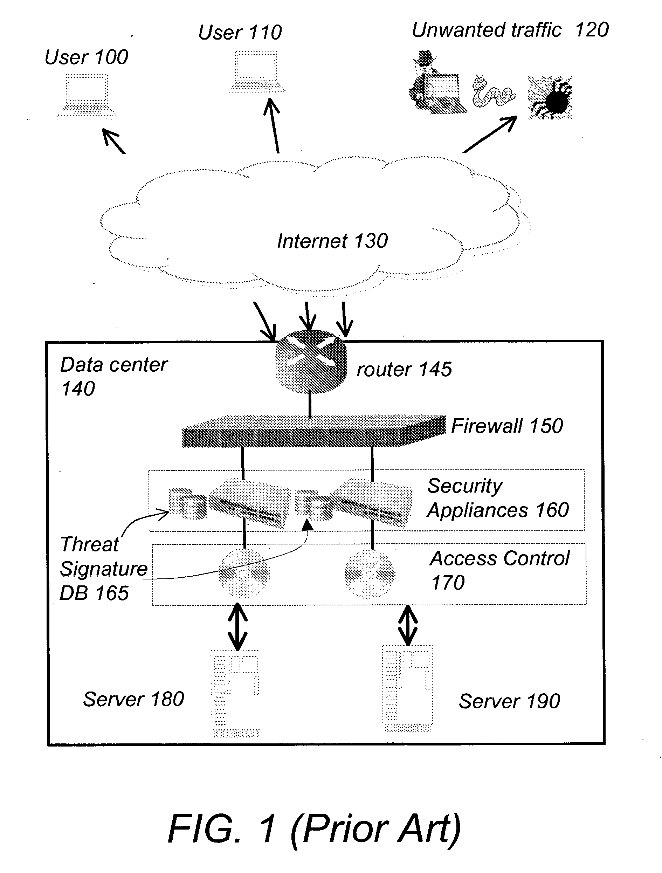

FIG. 1 shows a prior art approach for providing access control and security protection to networked computer services. An Internet based application providing a certain service is running on server 180 and server 190 inside data center 140. Client/user 100 and client /user 110 access the application via Internet 130. Likewise, spammers, virus and hackers can generate unwanted traffic 120 to access the application in the same way. In order to control access from such unwanted traffic, Firewall 150, security appliances 160 and access control mechanism 170 are deployed in front of the servers. By carefully deploying and configuring security appliances 160 and access control mechanism 170, unwanted traffic 120 can be filtered out.

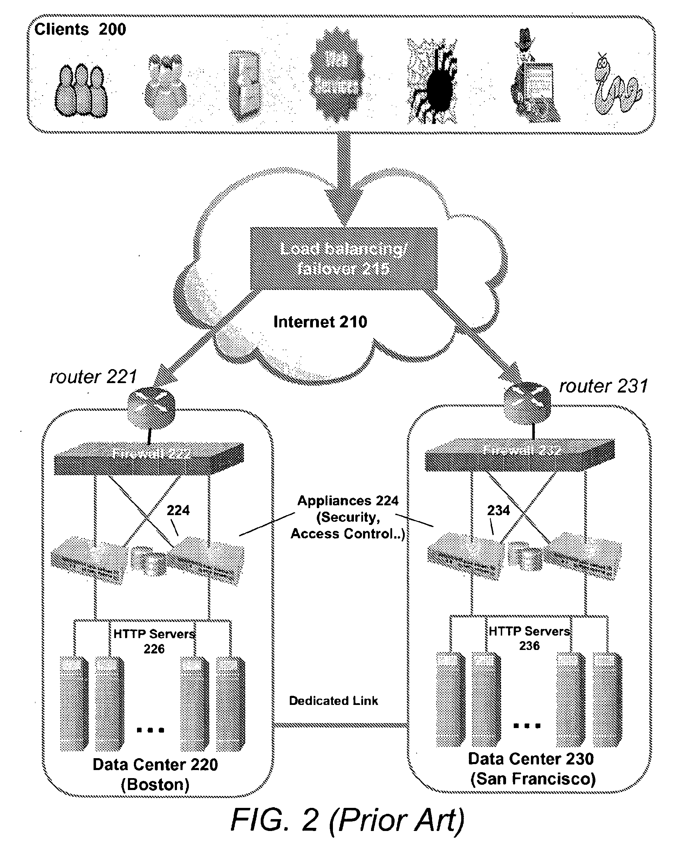

For scalability and availability reasons, a lot of network applications are deployed to more than one data center. The multiple data centers are typically located at different geographic locations. FIG. 2 shows securing such an Internet application deployed in two data centers: data center 220 and data center 230. Anonymous visitors 200 include legitimate users as well as unwanted traffic from bots, virus and attackers all access the application via Internet 210. Typically, some load balancing/failover mechanism 215 is used to direct traffic to different data centers. The common load balancing/failover mechanisms include round robin, weighted, and active/passive approaches to decide which data center should receive the traffic. No matter how traffic is load balanced, each data center needs to deploy firewall, security appliances and access control mechanisms in order to meet access management and security requirements. For example, firewall 222 and firewall 232 can be configured to allow only HTTP traffic to go through and thus non HTTP traffic is blocked out. Then appliances 224 and appliances 234 can be configured to block out unwanted web traffic and prevent unwanted access, and eventually only legitimate traffic arrives at HTTP servers for processing.

Many hardware vendors provide hardware devices for security protection. For example, Application Delivery Controller (ADC) devices, Intrusion Prevention Devices (IPS) and Web Application Firewall devices are the typical hardware appliances that customers use today for enforcing security. Some web acceleration devices also provide security protection features. A list of companies that provide such products include Arbor Networks, Cisco Systems, F5 Networks, BlueCoat, Brocade Communications, Citrix Systems, RadWare, Barracuda, JetNexus, Kemp Technologies, A10 Networks, CAI Networks, Coyote Point Systems, Crescendo Networks, StrangeLoop Networks, Stamped Technologies, and Zeus Technology, among others.

Access management is typically achieved via custom coding, though some of the hardware devices also provide some access management capability. For example, it is very common that customers implement specific code to verify the validity of client requests by checking the "cookie" field from an HTTP request. If a certain cookie is not found from such an HTTP request, the request is considered "illegal" and rejected. Another example is A/B testing. Customers implement some custom specific code to serve different pages to different clients according to the specific A/B testing logic.

However, the current "inside the data center" approaches such as deploying specialized hardware and custom coding do not work very well in reality. Some of the problems are listed below:
A. Hardware solutions require significant up front capital cost. Custom coding requires significant amount of up front development and ongoing maintenance.
B. The prior art approaches provision a fixed amount of processing capacity and network bandwidth. No matter how much capacity is provisioned up front, there is a capacity limit. When the traffic volume grows beyond this capacity limit, the system performance would degrade or even fail completely.
C. Hardware solutions require specialized technical skills to manage and configure them, such as Cisco trained professionals. Whenever a problem happens, it takes a lot of "trial and error" to figure out how to tune these hardware devices or change custom code to deal with the problem. This is one of the reasons that we see large scale web sites go down for days or even weeks when an attack happens.
D. Solutions from both software and hardware approaches are typically based on visibility of the local data and are only able to make decisions based on local knowledge. However, a lot of problems are best managed from a global perspective and the capability to apply global optimization is very important.
E. Neither the software or hardware approach provides a complete solution. In the end, a lot of customers have to spend a significant amount of time to research and build a solution by combining hardware and custom coding, dramatically increasing the initial adoption cost and ongoing maintenance cost.

As a result of the above problems, it is not surprising that a lot of web sites can not afford the cost and complexity of such solutions and thus are left vulnerable to security attacks. Even for these large scale web applications that have the resources and time to implement access management and security protection, it is not unusual to see them go down for a prolonged period of time whenever a problem happens due to the inflexibility and limitations of such approaches.

Thus there is a need for a new approach to provide access management and security protection that is easier to implement, easier to manage and more responsive to problems.

### Summary of the Invention

In general, in one aspect, the invention features a method for providing access management and security protection to a computer service, including the following steps. First providing a computer service that is hosted at one or more servers and is accessible to clients via a first network. Next, providing a second network that includes a plurality of traffic processing nodes. Next, providing means for redirecting network traffic from the first network to the second network and then redirecting network traffic targeted to access the computer service via the first network to traffic processing nodes of the second network via the means for redirecting network traffic. Next, inspecting and processing the redirected network traffic by the traffic processing nodes. Finally, routing only redirected network traffic that has been inspected, processed and approved by the traffic processing nodes to access the computer service via the second network.

Implementations of this aspect of the invention may include one or more of the following features. The second network is an overlay network superimposed over the first network. The processing of the redirected network traffic includes applying network traffic management comprising at least one of client throttling, geographic throttling or rate throttling. The inspecting of the redirected network traffic includes inspecting for presence of malware, spyware, virus, adult content, worm, denial of service attack, injection attack or information scanning attack. The method further includes preventing the redirected network traffic from accessing the computer service, upon confirmation of the presence of malware, spyware, virus, adult content, worm, denial of service attack, injection attack or information scanning attack. The second network further includes access management means and security protection means. The traffic processing nodes are configured to provide access management and security protection to the computer service via the access management means and security protection means, respectively. The method further includes applying access rules via the access management means and applying security rules via the security protection means to the redirected network traffic in real time. The access rules and the security rules are aggregates of access rules and security rules applied to a plurality of computer services. The method may further include providing means for monitoring network traffic parameters comprising at least one of network traffic volume, bandwidth consumption information, link congestion level, link latency, request URL or origin IP, and then monitoring the network traffic. The second network further includes a data processing system comprising one or more databases storing network traffic data produced by the monitoring means and the aggregate access rules and security rules. The method further includes sharing the network traffic data produced by the monitoring means and the aggregate access rules and security rules among a plurality of computer services. The data processing system further includes means for analyzing the network traffic data stored in the databases and the method further includes analyzing the stored data with the analyzing means to determine key network metrics required for decision making. The method further includes directing responses from the computer service to the traffic processing node of the second network and inspecting and processing the responses by the traffic processing node before returning the responses to the clients. The means for redirecting network traffic may be means for setting Domain Name System (DNS) Name Server (NS) record, means for setting DNS Canonical Name (CNAME) record, means for setting "A" record, means for hosting DNS records at a DNS system that resolves hostname of the computer service to traffic processing nodes, means for setting client side proxy configurations, or means for network address translation. The second network includes virtual machines nodes. The second network scales its processing capacity and network capacity by dynamically adjusting the number of traffic processing nodes. The computer service may be a web application, web service or email service. The method may further include providing an access control gateway. The access control gateway is configured to provide access control and security control to the computer service by allowing only network traffic from the traffic processing nodes of the second network to access the computer service. The access control gateway may be a router configured to allow only network traffic with a specific signature to pass through. The specific signature may be an IP address or token. The access control gateway may be a private communication channel between the computer service and the second network.

In general, in another aspect, the invention features a system for providing access management and security protection to a computer service including a first network, a computer service and a second network. The first network provides network connections between one or more servers and a plurality of clients. The computer service is hosted at the one or more servers and is accessible to the clients via the first network. The second network includes a plurality of traffic processing nodes. The system also includes means for redirecting network traffic targeted to access the computer service via the first network to traffic processing nodes of the second network. The system also includes means for inspecting and means for processing the redirected network traffic by the traffic processing nodes. The system also includes means for routing only redirected network traffic that has been inspected, processed and approved by the traffic processing nodes to access the computer service via the second network.

Among the advantages of the invention may be one or more of the following. The invention provides a service that prevents undesired access, filters out unwanted traffic targeted at a network application and allows only clean traffic to reach the network application. The present invention eliminates the need to set up special hardware appliances or write custom code inside the data center while enhancing the security and flexibility of such network application. The service for access management and security protection is built into the network itself. Traffic processing nodes with such intelligence are deployed at various locations of the network, together forming a network service for access management and security protection. Traffic targeted at a network application is intercepted and processed by this network service first. The network service inspects traffic, figures out how access should be granted, which traffic is unwanted and which is legitimate traffic according to rules and policies related to the specific network application. Further, the network service blocks out unwanted access, discards unwanted traffic and only forwards the legitimate traffic to the target network application. As a result, unwanted traffic is filtered out by the network and thus only clean traffic reaches the network application.

The invention also aggregates data and intelligence from many network applications, independent of whether these network applications are related or not, in order to make better decisions. A centralized global data storage is used for storing and managing threat signature patterns, storing monitoring results of global network conditions, storing monitoring results of all protected network applications, storing gathered global data, providing global visibility and correlating all these stored data to provide access management and security protection for a plurality of network applications. The data stored in the global data storage are shared among all network applications. Whenever a new threat is detected, its signature patterns are added to the threat signature patterns database. Since a shared global data storage is used, threat signature patterns need to be updated only once and can be applied to all network services. This is distinctly different from prior art solutions where each network application must update its own threat signature database in order to prevent new attacks.

Furthermore, the network service uses probes deployed at various locations of the network to gather data. Such data may include bandwidth consumption information, link congestion level, link latency, request URL, origin IP, among others. Such data are stored at specific locations, forming a global data repository. Furthermore, the service performs analysis based on the global data repository to determine some key metrics required for decision making, such as request rate from a specific client, the geographic location of a specific client IP, the number of requests to a specific URL, the number of requests from a specific client, among others. As a result of such global data analysis, the network service is able to identify undesirable access, unwanted traffic and detect problems much better than the prior art solutions.

The invention also provides an access management and security protection network service that automatically grows or shrinks its processing capacity and bandwidth capacity in response to the traffic demand, thus being able to handle large scale distributed denial of service attacks without building up an expensive infrastructure up front.

The invention also provides a system and method that secures network applications by disabling the public network access to the application directly without disrupting access from legitimate clients from the public network. Such applications are referred to as "virtual private applications". In one embodiment, the servers on which the application runs are deployed behind a router which blocks out public network access to the target network application. A private communication tunnel between the servers and the routing network is established and all traffic to the target network application is redirected through the routing network which then enforces security rules and polices. As a result, only legitimate traffic can access the application.

The details of one or more embodiments of the invention are set forth in the accompanying drawings and description below. Other features, objects and advantages of the invention will be apparent from the following description of the preferred embodiments, the drawings and from the claims.

### Brief Description of the Drawings

FIG. 1 shows a prior art approach for access management and security protection of Internet based applications deployed in one data center;
FIG. 2 shows a prior art approach for access management and security protection of Internet based applications deployed in multiple data centers;
FIG. 3 shows a cloud routing-based access management and security service of the present invention;
FIG. 4 shows the functional blocks of the cloud routing system of FIG. 3;
FIG. 5 illustrates the concept of a "virtual private application";
FIG. 6 shows how traffic is being routed and processed;
FIG. 7 shows the traffic processing pipeline in a cloud routing network;

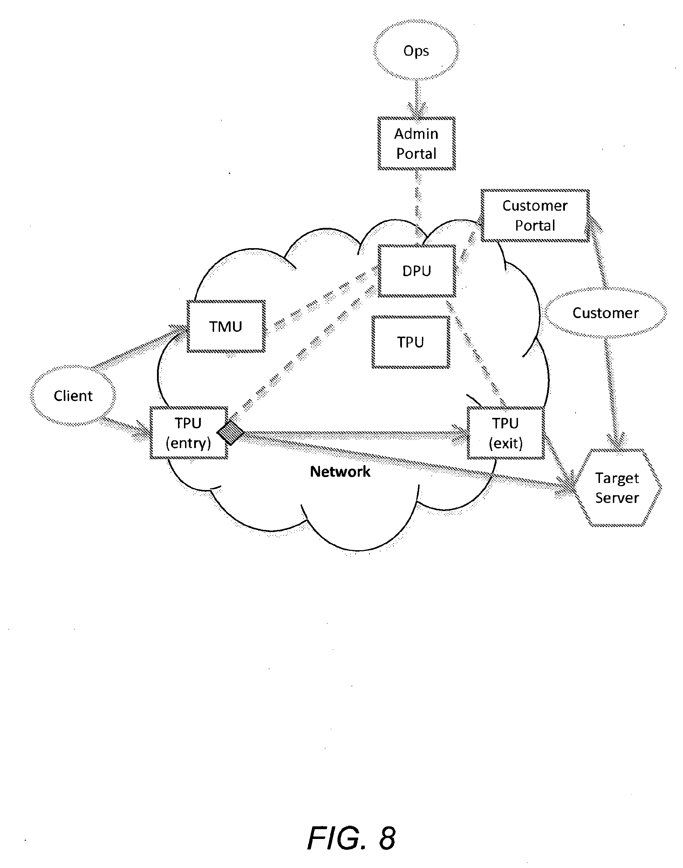

FIG. 8 shows various components in a cloud routing network;

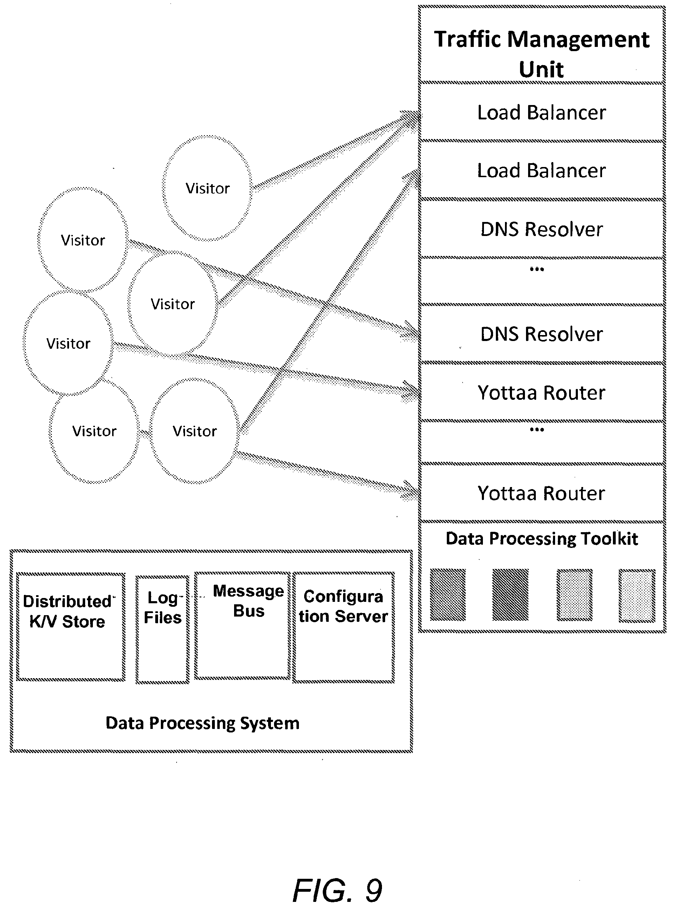

FIG. 9 shows a traffic management unit (TMU);.

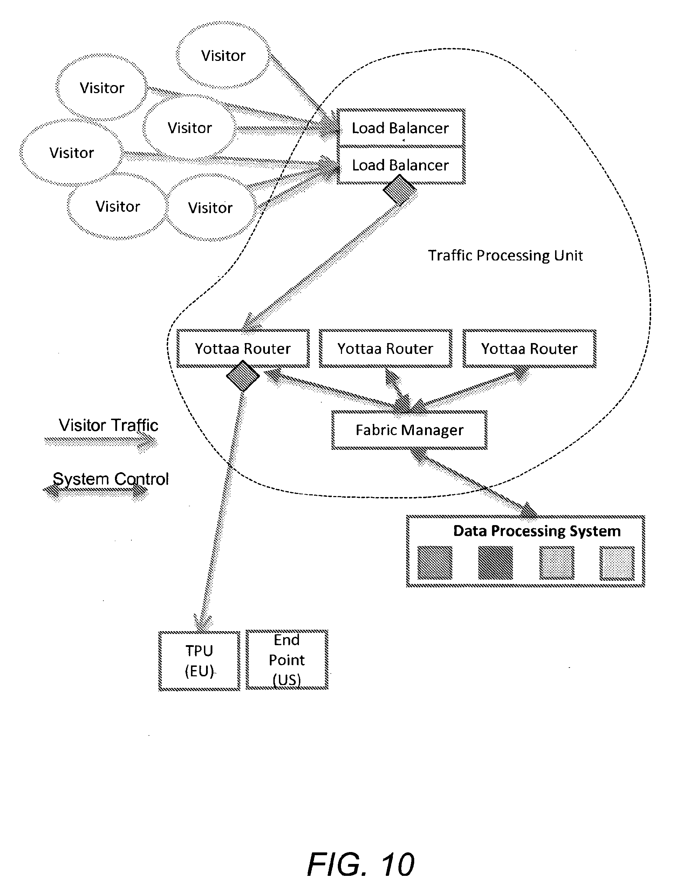

FIG. 10 shows the various sub-components of a traffic processing unit (TPU);

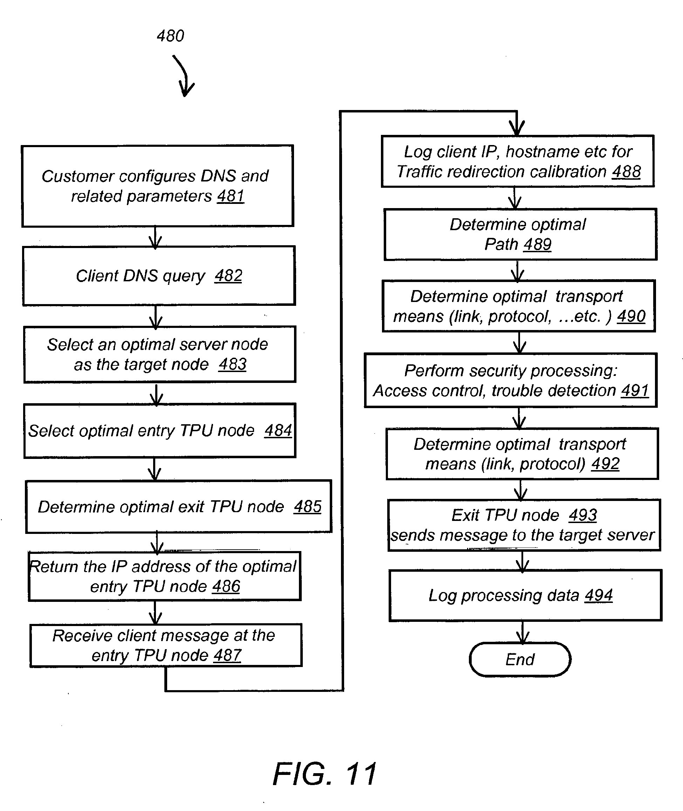

FIG. 11 shows the cloud routing workflow;
FIG. 12A shows the network capacity and bandwidth scaling workflow;

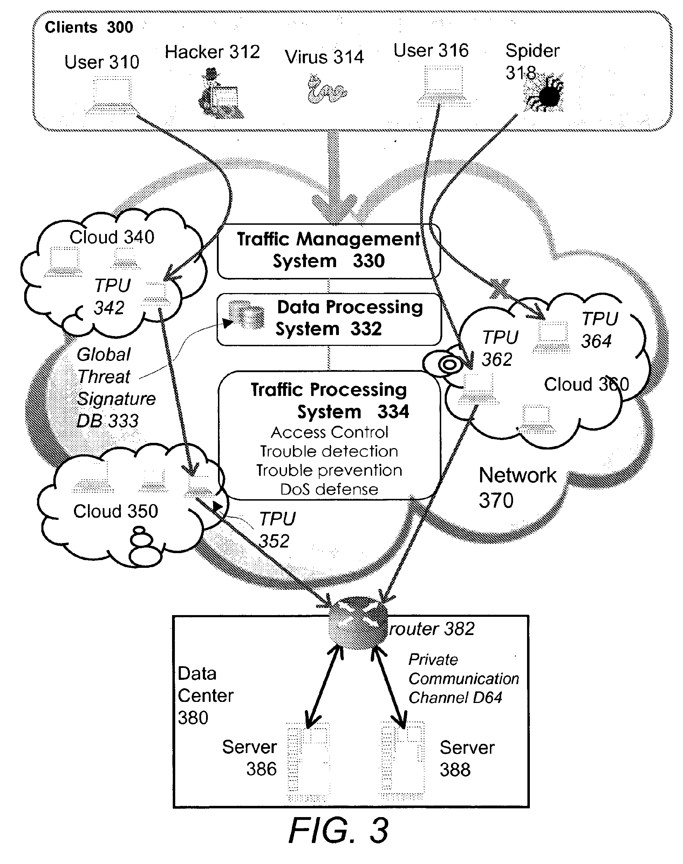

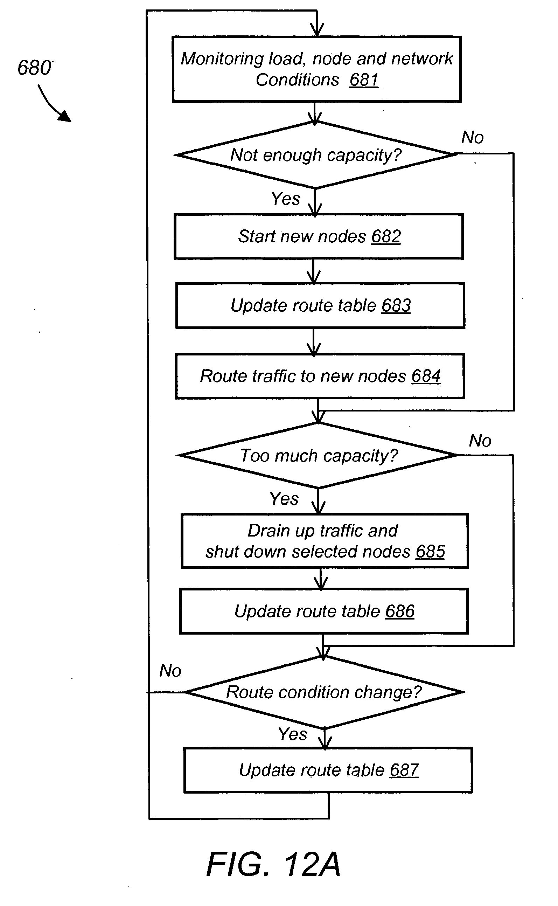

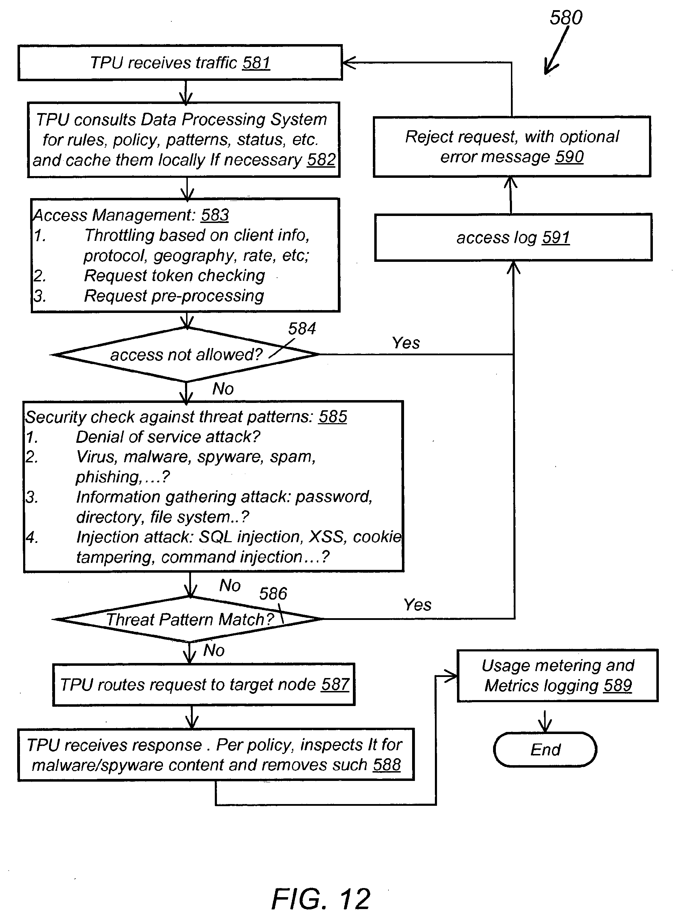

FIG. 12 shows the workflow for access management and security protection in the cloud routing system of FIG. 3;

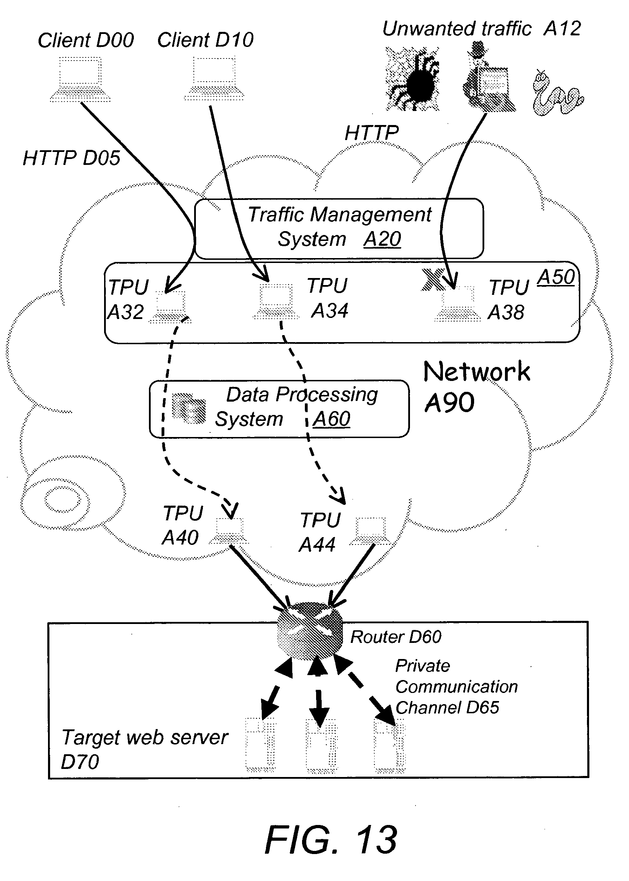

FIG. 13 is a schematic diagram of the access management and security protection for web applications;

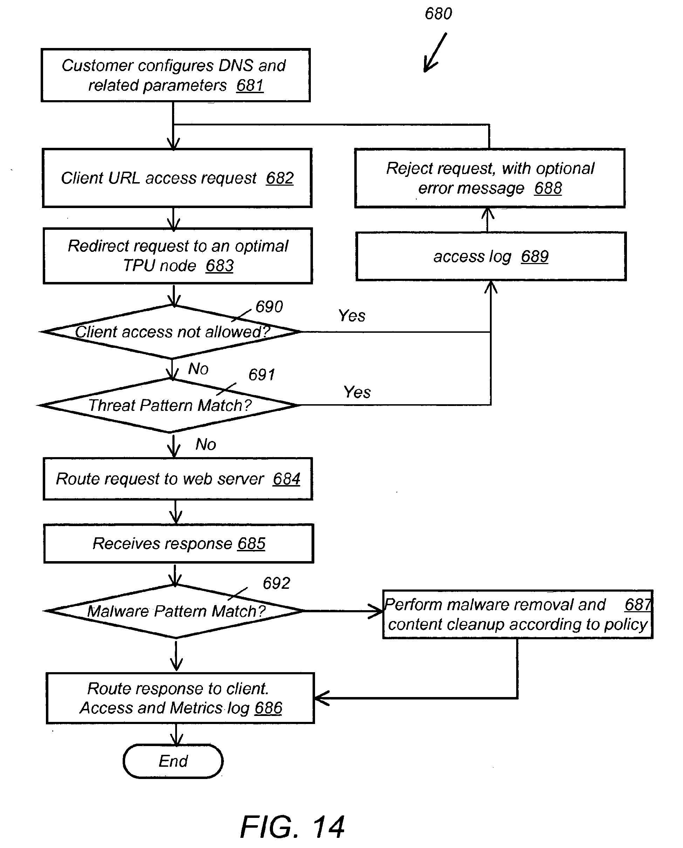

FIG. 14 shows the workflow for access management and security protection for web applications of FIG. 13;

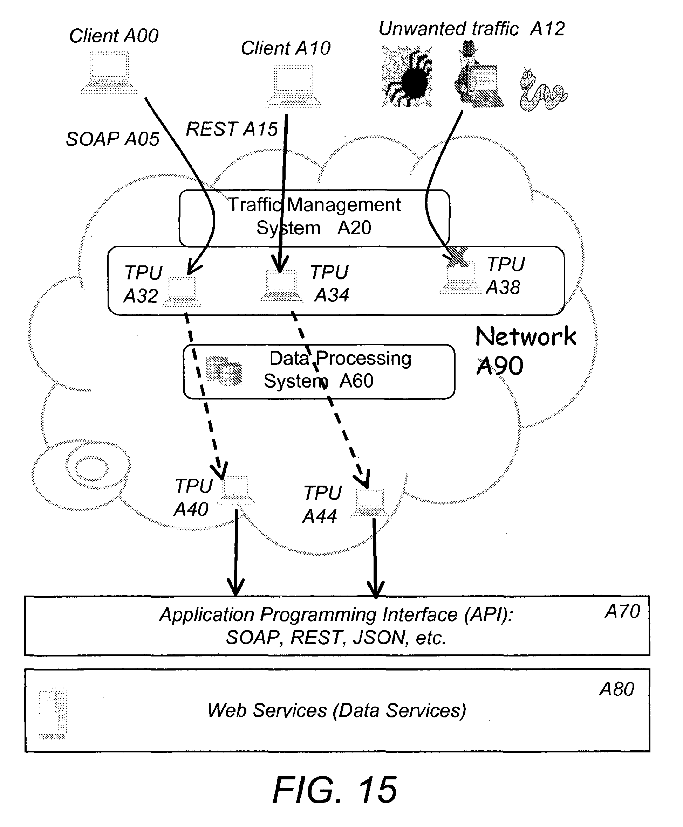

FIG. 15 is a schematic diagram of the access management and security protection for web services;

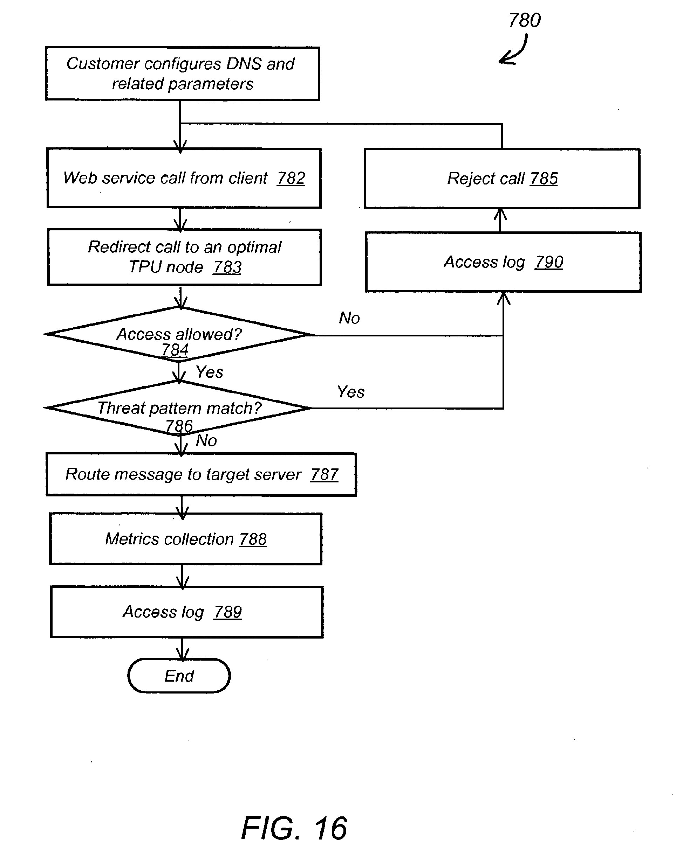

FIG. 16 shows the workflow for access management and security protection for web services of FIG. 15;

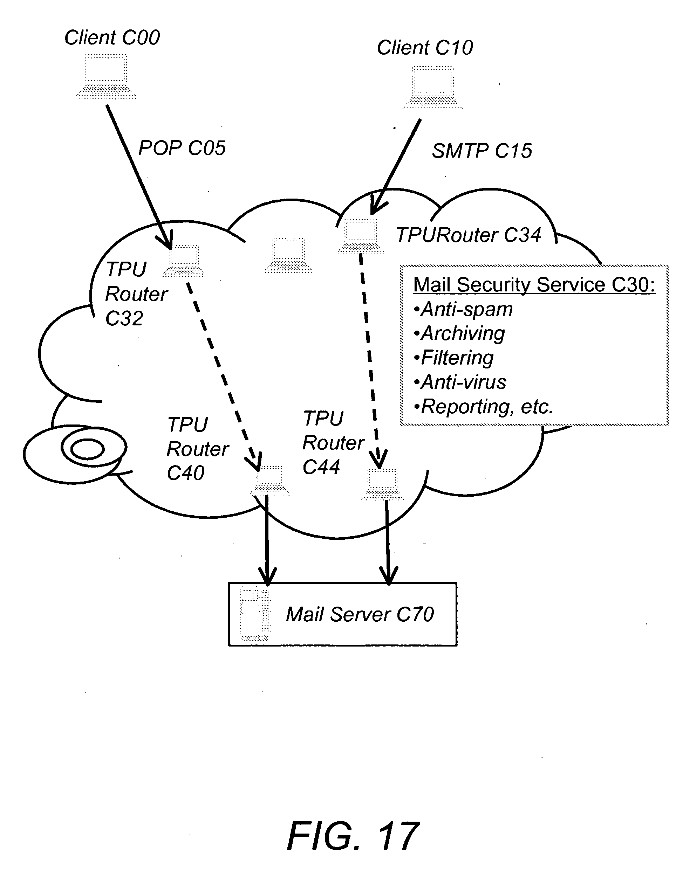

FIG. 17 is a schematic diagram of the access management and security protection for email services; and

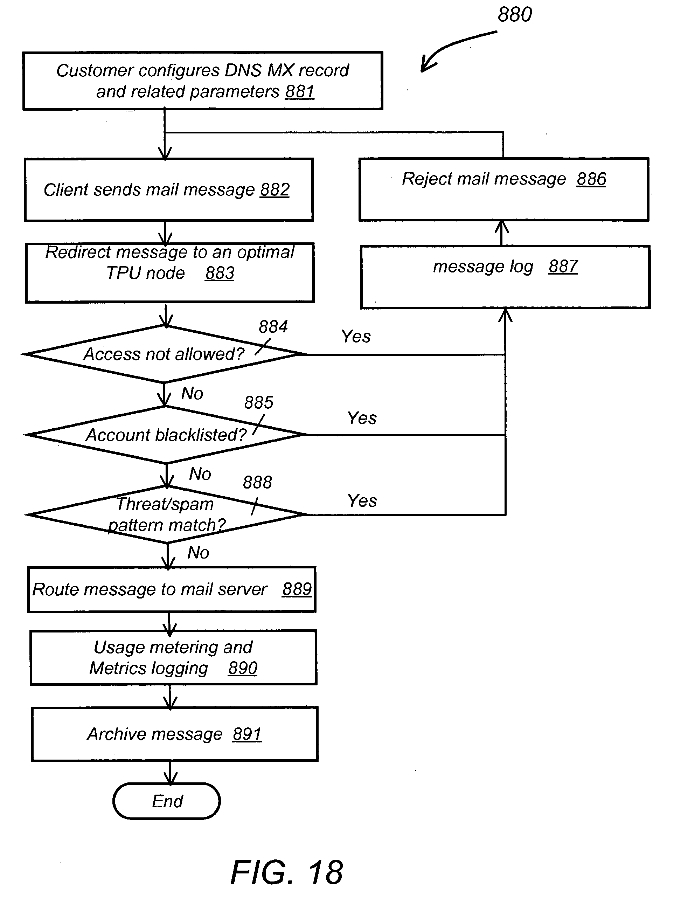

FIG. 18 shows the workflow for access management and security protection for email services of FIG. 17.

### Detailed Description of the Invention

The present invention utilizes an overlay virtual network to provide access management and security protection for networked computer services (Virtual Network-based Security Service). The security service itself is a network service that provides access control, trouble detection, trouble prevention, malware detection and removal, and denial of service (DOS) mitigation for other network services that the overlay network is connected to, such as web applications and web services.

Traffic processing nodes are deployed on the physical network through which client traffic travels to data centers where a network application is running. These traffic processing nodes are called "Traffic Processing Units" (TPU). TPUs are deployed at different locations, with each location forming a computing cloud. All the TPUs together form a "virtual network", referred to as a "cloud routing network". A traffic management mechanism intercepts all client traffic and redirects them through the TPUs. TPUs consult global data store in trouble detection, trouble prevention, access control and Denial of Service Attack (DOS) defense. In the end, only "clean traffic" is routed to the target data center and thus the network application is protected.

Each TPU has a certain amount of bandwidth and processing capacity. These TPUs are connected to each other via the underlying network, forming a virtual network. This virtual network possesses a certain amount of bandwidth and processing capacity by combing the bandwidth and processing capacities of all the TPUs. When traffic grows to a certain level, the virtual network starts up more TPUs as a way to increase its processing power as well as bandwidth capacity. When traffic level decreases to a certain threshold, the virtual network shuts down a certain TPUs to reduce its processing and bandwidth capacity.

Referring to FIG 3, the virtual network includes nodes deployed at locations cloud 340, cloud 350 and cloud 360. Each cloud includes nodes running specialized software for traffic management, traffic cleaning and related data processing. From a functional perspective, the virtual network includes traffic management system 330 that intercepts and redirects network traffic, traffic processing 334 that perform access control, trouble detection, trouble prevention and denial of service (DOS) mitigation, and data processing system 332 that gathers data from different sources and provides global decision support.

The protected network service is running on multiple servers (i.e., server 386 and server 388) behind a firewall inside data center 380. Clients 300 access this network service via network 370. There are different types of clients: users 310 and 316, spider 318, hacker 312, and virus 314. Depending on the specific conditions related to the protected network service, some client requests are legitimate, some are not. Some client access requests are undesirable.

Without the security service illustrated in FIG 3, network 370 will indiscriminately route all client requests to data center 380, exposing its hosted services to unwanted access requests, wasteful traffic, threats and attacks. With the security service of the present invention, when a client 310 issues a request to the protected network service, the request is intercepted by the traffic management system (TMS) 330. Instead of routing the request directly to the target servers 386, 388, where the application is running ("Target Server"), traffic management system 330 redirects the request to an "optimal" traffic processing unit (TPU) 342 for processing. More specifically, as illustrated in FIG. 3, traffic management system 330 consults DPS 332 and selects an "optimal" traffic processing unit 342 to route the request to. "Optimal" is defined by the specific application, as such being the closest geographically, being the closest in terms of network distance/latency, being the best performing node, being the cheapest node in terms of cost, or a combination of a few factors calculated according to a specific algorithm.

The traffic processing unit then performs inspection of the request and determines its access condition and status. Unlike the prior art solutions where such decisions are based on local data gathered by individual appliances, the present invention makes much better decisions by leveraging its global data visibility.

Lastly, the traffic processing unit performs traffic processing by applying rules associated with access management and security. For example, as shown in FIG. 3, the request from spider 318 is rejected by TPU 364 because TPU 364 determines such request "unwanted". In some cases, the TPU routes the request to a target server directly, such as TPU 362 in FIG. 3. In other cases, the TPU routes the request to another traffic processing unit which may eventually route the request to target server, such as TPU 342 to TPU 352 and the to servers 386, 388. As a result, only "clean traffic" will arrive at the target servers and all "unwanted traffic" is processed at the network layer, saving the cost and challenges of deploying and configuring hardware appliances or writing custom code inside data center 380 in order to protect the target servers. FIG. 12 depicts the workflow for access management and security protection in the cloud routing system of FIG. 3.

### CLOUD ROUTING NETWORK

The present invention leverages a cloud routing network. By way of background, we use the term "cloud routing network" to refer to a virtual network that includes traffic processing nodes deployed at various locations of an underlying physical network. These traffic processing nodes run specialized traffic handling software to perform functions such as traffic re-direction, traffic splitting, load balancing, traffic inspection, traffic cleansing, traffic optimization, route selection, route optimization, among others. A typical configuration of such nodes includes virtual machines at various cloud computing data centers. These cloud computing data centers provide the physical infrastructure to add or remove nodes dynamically, which further enables the virtual network to scale both its processing capacity and network bandwidth capacity. A cloud routing network contains a traffic management component 330 that redirects network traffic to its traffic processing units (TPU), a traffic processing mechanism 334 that inspects and processes the network traffic and a DPS 332 that gathers data from different sources, stores them in a global data store and provides global decision support and means to configure and manage the system.

FIG. 3 shows a typical cloud routing network and how it routes client requests to target data center servers. A network accessible computer service is running on servers 486 and 38 inside data center 380. Legitimate clients/users 310 and 314 as well as unwanted traffic 312, 314, 318 are all connected to data center 380 via network 370. A virtual network including nodes cloud 340, cloud 350 and cloud 360 is layered on top of network 370. Most nodes are virtual machines running specialized traffic handling software. Each cloud itself is a collection of nodes located in the same data center (or the same geographic location). Some nodes perform traffic management. Some nodes perform traffic processing. Some nodes perform monitoring and data processing. Some nodes perform management functions to adjust the virtual network's capacity.

These nodes are connected to each other via the underlying network 370. The connection between two nodes may contain many physical links and hops in the underlying network, but these links and hops together form a conceptual "virtual link" that conceptually connects these two nodes directly. All these virtual links together form the virtual network. Each node has only a fixed amount of bandwidth and processing capacity. The capacity of this virtual network is the sum of the capacity of all nodes, and thus a cloud routing network has only a fixed amount of processing and network capacity at any given moment. This fixed account of capacity may be insufficient or excessive for the traffic demand. By adjusting the capacity of individual nodes or by adding or removing nodes, the virtual network is able to adjust its processing power as well as bandwidth capacity.

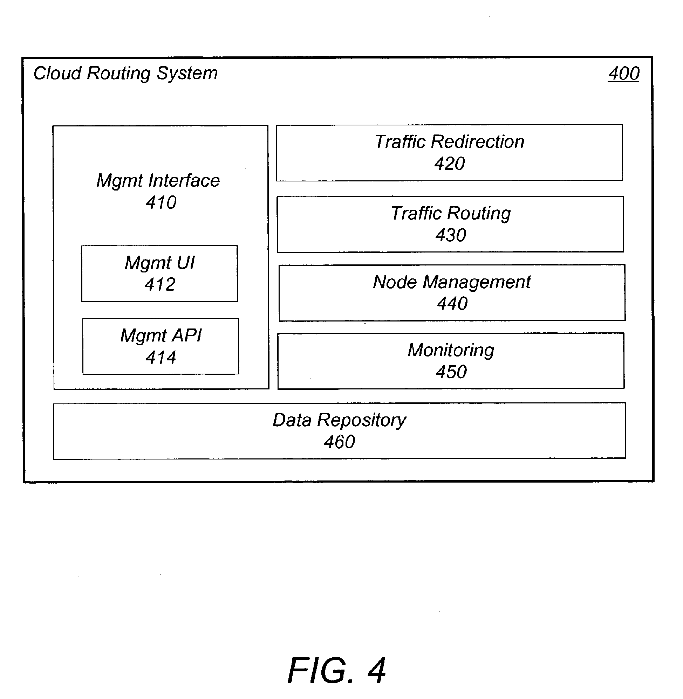

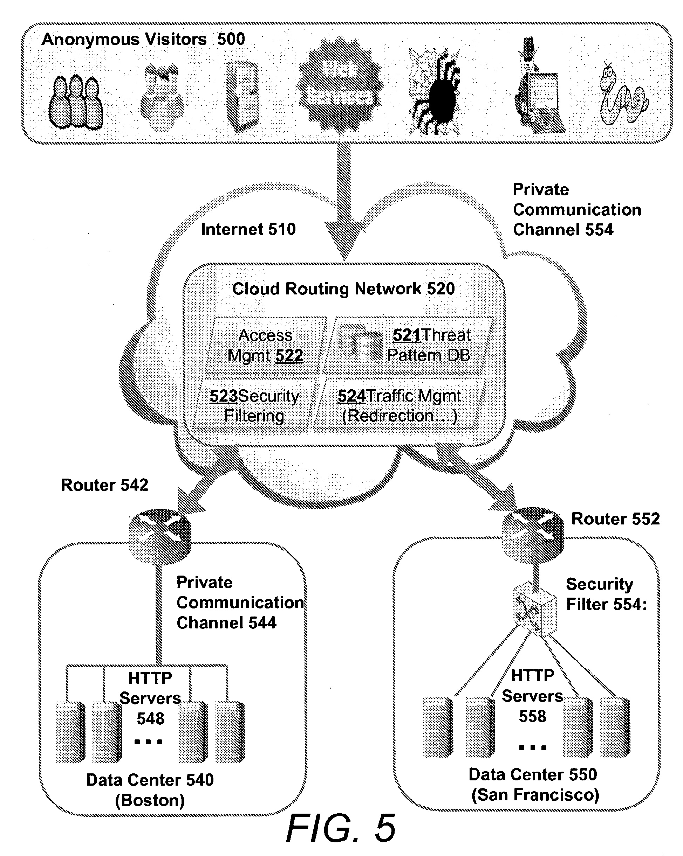

Referring to FIG. 4, the functional components of the cloud routing system 400 include a Traffic management interface unit 410, a traffic redirection unit 420, a traffic routing unit 430, a node management unit 440, a monitoring unit 450 and a data repository 460. The traffic management interface unit 410 includes a management user interface (UI) 412 and a management API 414. A cloud routing network can offer many kinds of services other than access management and security protection, such as policy enforcement, routing acceleration, performance optimization, among others, as shown in FIG. 5.

### TRAFFIC PROCESSING

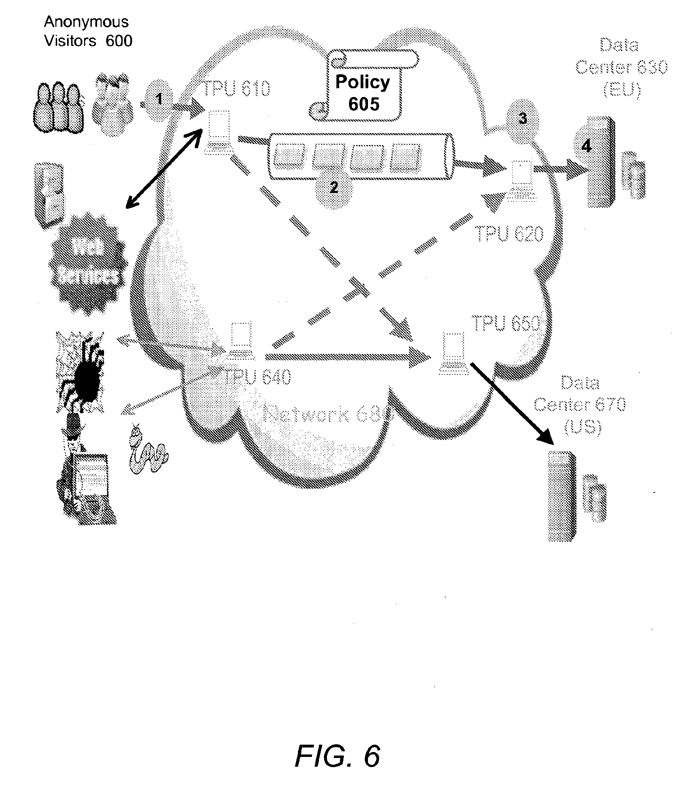

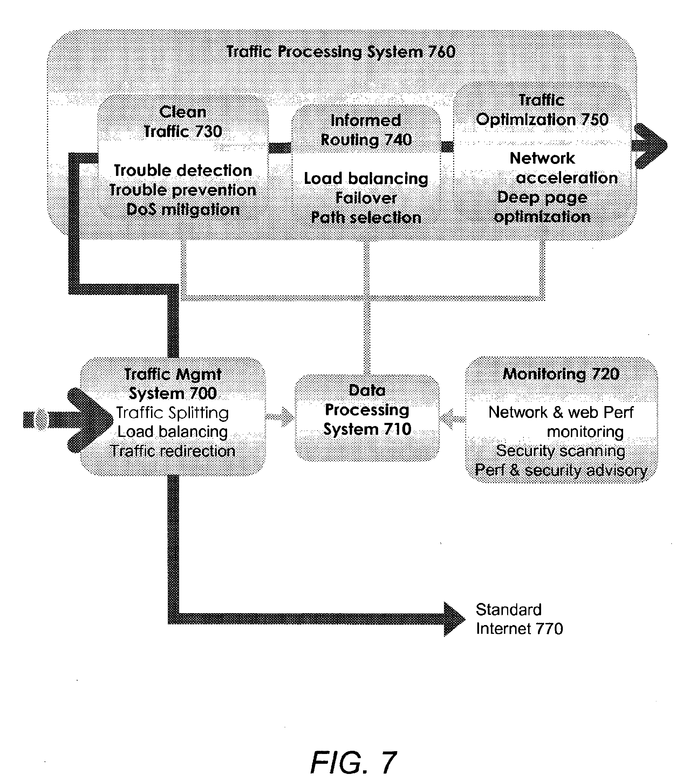

The invention uses a network service to process traffic and thus delivers only "clean" traffic to the target servers. FIG. 6 shows a typical traffic processing service. When a client 600 issues a request to a network service running on servers 630, 670, a cloud routing network processes the request in the following steps:
1. Traffic management service intercepts the requests and routes the request to a TPU node 610, 620, 640 or 650;
2. The TPU node checks application specific policy and performs pipeline processing. The pipeline processing is illustrated in FIG 7.
3. If necessary, a global data repository is used for data collection and data analysis for decision support;
4. If necessary, the client request is routed to the next TPU node, i.e., from TPU 610 to 620; and then
5. Request is sent to an "optimal" server 630 for processing

More specifically, when a client issues a request to a server (for example, a consumer enters a web URL into a web browser to access a web site), the default Internet routing mechanism would route the request through the network hops along a certain network path from the client to the target server ("default path"). Using a cloud routing network, if there are multiple server nodes, the cloud routing network first selects an "optimal" server node from the multiple server nodes as the target serve node to serve the request. This server node selection process takes into consideration factors including load balancing, performance, cost, and geographic proximity, among others. Secondly, instead of going through the default path, the traffic management service redirects the request to an "optimal" Traffic Processing Unit (TPU) within the overlay network ("Optimal" is defined by the system's routing policy, such as being geographically nearest, most cost effective, or a combination of a few factors). This "optimal" TPU further routes the request to second "optimal" TPU within the cloud routing network if necessary. For performance and reliability reasons, these two TPU nodes communicate with each other using either the best available mechanism or an optimized transport mechanism. Then the second "optimal" node may route the request to a third "optimal" node and so on. This process can be repeated within the cloud routing network until the request finally arrives at the target server. The set of "optimal" TPU nodes together form a "virtual" path along which traffic travels. This virtual path is chosen in such a way that a certain routing measure (such as performance, cost, carbon footprint, or a combination of a few factors) is optimized.

When the server responds, the response goes through a similar pipeline process within the cloud routing network until it is reaches the client. In the process, the response may be inspected for possible containment of "unwanted content" such as spyware, malware, pornography and so on. Such "unwanted content" is removed from the response if policy requires doing so.

### PROCESS SCALING AND NETWORK SCALING

The invention also uses the virtual network for performing process scaling and bandwidth scaling in response to traffic demand variations. The cloud routing network monitors traffic demand, load conditions, network performance and various other factors via its monitoring service. When certain conditions are met, it dynamically launches new nodes at appropriate locations and spreads load to these new nodes in response to increased demand, or shuts down some existing nodes in response to decreased traffic demand. The net result is that the cloud routing network dynamically adjusts its processing and network capacity to deliver optimal results while eliminating unnecessary capacity waste and carbon footprint.

FIG. 12A depicts how a cloud routing network scales its capacity on demand (680). Based on the continuously collected metrics data from monitor nodes and logs, a unit's fabric manager checks the current capacity and takes actions (681). When it detects that capacity is "insufficient" according to a certain measure, it starts new nodes (682). The router table is updated to include the new nodes (683) and then it spreads traffic to the new nodes (684). When too much capacity is detected, the fabric manager selectively shuts down some of the nodes after traffic to these nodes have been drained up (685). The router tables are updated by removing these nodes from the tables (686). At any time, when an event such as node failure or path condition change occurs, the router table is updated to reflect the change (687). The updated router table is used for subsequent traffic routing.

Further, the cloud routing network can quickly recover from "fault". When a fault such as node failure and link failure occurs, the system detects the problem and recovers from it by either starting a new node or selecting an alternative route. As a result, though individual components may not be reliable, the overall system is highly reliable.

### TRAFFIC REDIRECTION

The present invention includes a mechanism, referred to as "traffic redirection", such that client requests are intercepted and redirected to traffic processing nodes. The traffic processing nodes inspect the traffic, process the traffic by applying rules and polices associated with access management and security protection. As a result, a traffic process node may discard or reject the traffic if such traffic is determined to be "unwanted traffic", or otherwise route the traffic to the target server.

The following list includes a few examples of the traffic interception and redirection mechanisms. However, this list is not intended to be exhaustive. The invention intends to accommodate various traffic redirection means.
A. Proxy server settings: most clients support a feature called "proxy server setting" that allows the client to specify a proxy server for relaying traffic to target servers. When a proxy server is configured, all client requests client are sent to the proxy server, which may relay the traffic between the target server and the client.
B. DNS redirection: when a client tries to access a network service via its hostname, the hostname needs to be resolved into an IP address. This hostname to IP address resolution is achieved by using Domain Name Server (DNS) system. DNS redirection can provides a transparent way for traffic interception and redirection by implementing a customized DNS system that resolves a client's hostname resolution request to the IP address of an appropriate traffic processing node, instead of the IP address of the target server node.
C. HTTP redirection: there is a "redirect" directive built into the HTTP protocol that allows a server to tell the client to send the request to a different server.
D. Network address mapping: a specialized device can be configured to "redirect" traffic targeted at a certain destination to a different destination. This feature is supported by a variety of appliances (such as network gateway devices) and software products. One can configure such devices to perform the traffic redirection function.

### MONITORING

Referring to FIG. 7, a cloud routing network contains a monitoring service 720 that provides the necessary data to the cloud routing network as the basis for operations. Various embodiments implement a variety of techniques for monitoring. The following lists a few examples of monitoring techniques:
A. Internet Control Message Protocol (ICMP) Ping: A small IP packet that is sent over the network to detect route and node status;
B. traceroute: a technique commonly to check network route conditions;
C. Host agent: an embedded agent running on host computers that collects data about the host;
D. Web performance monitoring: a monitor node, acting as a normal user agent, periodically sends HTTP requests to a web server and processes the HTTP responses from the web server. The monitor nodes records metrics along the way, such as DNS resolution time, request time, response time, page load time, number of requests, number of JavaScript files, or page footprint, among others.
E. Security monitoring: A monitor node periodically scans a target system for security vulnerabilities such as network port scanning and network service scanning to determine which ports are publicly accessible and which network services are running, further determining whether there are vulnerabilities.
F. Content security monitoring: a monitor nodes would periodically crawls a web site and scans its content for detection of infected content, such as malware, spyware, undesirable adult content, or virus, among others.

The above examples are for illustration purpose. The present invention is agnostic and accommodates a wide variety of ways of monitoring. An embodiment of the present invention employs all above techniques for monitoring different target systems: Using ICMP, traceroute and host agent to monitor the cloud routing network itself, using web performance monitoring, network security monitoring and content security monitoring to monitor the available, performance and security of target network services such as web applications.

Referring to FIG. 7, a data processing system 710 (DPS) aggregates data from such monitoring service and provides all other computer services global visibility to such data and intelligence from many network applications, independent of whether these network applications are related or not, in order to make better decisions. Data processing system 710 includes a centralized global data storage used for storing threat signature patterns, monitoring results of global network conditions, monitoring results of all protected network applications, gathered global data. DPS 710 provides global visibility of the stored data to all network applications and analyzes and correlates all these stored data in order to provide access management and security protection for all network applications. As a result of this global visibility, the data produced by the above mentioned monitoring activities of all network applications are shared among all network applications. Whenever a new threat is detected, its signature patterns are added to the threat signature patterns database and thus become available to all network services. This is distinctly different from prior art solutions where each network application must update its own threat signature database in order to prevent new attacks.

Furthermore, the network service uses probes deployed at various locations of the network to gather data. Such data may include bandwidth consumption information, link congestion level, link latency, request URL, origin IP, among others. Such data are stored at specific locations, forming a global data repository. Furthermore, the service performs analysis based on the global data repository to determine some key metrics required for decision making, such as request rate from a specific client, the geographic location of a specific client IP, the number of requests to a specific URL, the number of requests from a specific client, among others. As a result of such global data analysis, the network service is able to identify undesirable access, unwanted traffic and detect problems much better than the prior art solutions.

Following the forgoing discussed embodiments of using the present invention to provide access management and security protection for general network accessible computer services, the present invention will be better understood by reviewing some specific applications: virtual private application, web applications, web services, and email servers.

### VIRTUAL PRIVATE APPLICATION

Part of the present invention disclosed here is a system and method for enabling a "virtual private application". Typical network applications (or network accessible computer services) are designed to be accessible by anyone that has access to that network. Due to the open nature of network access, the network application may become target of unwanted or even malicious traffic.

The present invention "removes" the network application from public access. In fact, it makes the application "not publicly" accessible. Its access is limited to certain parts of a virtual network only. All traffic targeted at the application is routed to a virtual network for processing. Upon cleaning unwanted or malicious traffic, only "clean traffic" arrives at the application.

FIG. 5 shows embodiments of this aspect of the present invention. A cloud routing network (520) is the virtual network that processes all traffic for target applications. The virtual network uses a centrally managed threat pattern database 521 for performing access management 522 and security filtering 523 on incoming traffic, and only delivers clean traffic to target nodes. There are various techniques of the present invention to make a network application "not publicly accessible". FIG 5 shows two embodiments:
- Via special data enter router configuration: Router 542 is responsible for routing traffic in and out of data center 540, where a network application is hosted. Configuring the Access Control List (ACL) on Router 542 is one of the ways to allow access from only selected IP addresses. In this embodiment, the ACL is limited to specific TPU nodes in the cloud routing network 520. Traffic from anywhere else is blocked by Router 542 automatically.
- Via specialized security filter added into the data center: For a different application running inside data center 550, the data center router 552 is not changed. Instead, a security filter 554 is added to the data center that allows only traffic from certain TPU nodes in the virtual network. All other traffic is blocked out automatically. The security filter can be achieved using either software or hardware.

In another example, the target server nodes establish a private communication channel with TPU nodes and only accept packets from this private communication channel. This invention is not limited to a specific technique but rather accommodates a wide range of such techniques.

### WEB APPLICATION SECURITY

A part of the present invention disclosed here is a system and method for web application security.

Referring to FIG. 13 an embodiment of web application security includes a virtual network of TPUs A32, A34, A38, A40, and A44 superimposed over physical network A90. The virtual network also includes a traffic management system A20, a data processing system A60 and a traffic processing system A50. The traffic management system A20 intercepts and redirects client traffic targeted at the application to the traffic processing system A50. The traffic processing system A50 includes traffic processing units A32, A34, A38. Each TPU inspects its incoming traffic, cleans it up and only routes "clean" traffic to the target servers. The data processing system A60 contains a threat signature database that is used during traffic inspection and also collects data from different parts of the network for TPU consumption. In FIG. 13, unwanted traffic A12 is routed to TPU A38, which rejects the traffic upon inspection. Traffic from clients D00 and D10 are routed to TPU A32 and A34, which further deliver the traffic to TPU A40 and A44, respectively. TPUA40 and A44 eventually deliver the traffic to target web server D70.

In this embodiment the traffic management system utilizes customized Domain Name System (DNS) servers and configures the application's DNS record to point to the customized DNS servers. Such configuration can be achieved by setting various DNS entries. The following is a sample list of techniques:
- Setting "NS" record: Setting "NS" entry in the application's DNS records to a customized DNS server tells clients to perform DNS resolution for this application via the customized DNS server;
- Setting "CNAME" entry: Setting "CNAME" entry in the application's DNS records to a different domain name tells clients to perform DNS resolution for this application via the DNS server of this different domain name, which can be chosen in such a way that this different domain name's DNS server is a customized DNS server;
- Hosting the entire DNS record on the customized DNS server: One can change the DNS server of the application to be a customized DNS server directly. As a result, all DNS inquires to this application will be resolved by the customized DNS server.

When a client is trying to access a Web URL, instead of resolving the hostname to the IP address of a target server, the customized DNS server resolves the hostname of the URL to the IP address of an "optimal" Traffic Processing Unit (TPU) node within the web application security system. As a result, all traffic targeted at a target server is "redirected" to the TPU unit instead.

When the TPU node receives a request from a client, it inspects the request, compares it to the known threat patterns provided by the data processing system and performs a series of security checks and access management tasks. First, the TPU performs access management by checking predefined rules and policies, and compares the related data associated with such rules and policies, such as request protocol, client information, geography, request rate and request token, among others. Such access checking allows the TPU to determine whether access should be granted to this request. If the access should be denied, such traffic is rejected and the event is logged. For example, if the client IP is in an IP black list, the request should be denied. Otherwise the TPU continues to process the request. Next, it performs a serious of security checks by comparing the request to a threat signature pattern database. The matching process helps the TPU determine whether the request poses security threat and thus should be denied. Typical forms of security threats considers include denial of service attacks (DOS), virus, spam, worm, spyware, malware, phishing, information gathering attacks (directory scanning, link crawling, password cracking) and injection attacks (SQL injection, variable injection, command injection, cookie tampering, cross site scripting attacks). If a threat match is found, the request is rejected. Otherwise the request is routed to the target node for processing. When an attack against one application is identified, the data processing system A60 is updated immediately and such update prevents other applications from being attacked by the same attack.

The above list is not intended to be exhaustive but rather for the purpose of illustrating the subject invention. There are many other security checks, such as applying customer configured rules, running customer configured filter or even run custom logic, that the system performs. These variants are all within the scope of the subject invention as defined by the claims.

FIG. 13 shows such a web application security system and FIG. 14 shows the corresponding process. Client D00 sends an HTTP request D05 trying to access web server D70 (622) . The HTTP request D05 is redirected to router node A32 by the traffic redirection mechanism A20 (683). Router A32 performs a series security checks including URL blocking and IP blacklisting. If the request fails these checks, an error is returned to the client and the event is logged (688). Otherwise router A32 sends the request to an exit router A40 via some optimized transport and an optimal path (684). Router A40 delivers the request to web server D70 and receives the response (685). Router A40 further inspects the response for malcontent, malware, virus or other inappropriate content by using its pattern database (687). If malicious content is found, the system either removes such content or returns an error to the client, depending on the specific policy for this application. Otherwise the response is returned to the client and the client now displays the requested web page (688).

The advantages of the present invention include the following. It is very easy to adopt the presented solution because it is non-intrusive to customers and users. Customers do not need to purchase hardware or install software in order to use the web security service. Users do not need to change anything in order to receive the benefits of the service. As a hosted service, the present invention allows a service provider to continuously collect data and use collected data to continuously enhance the service. For example, a service provider can stop the users from accessing a new phishing site as soon as the service provider identifies the phishing site, significantly reducing the damage. As an application based on a cloud routing network, the service has "auto scaling" capability built in to deliver both performance and cost effectiveness. As an application based on a cloud routing network, it also provides load balancing and failover capabilities. For example, if one web server is down, the system automatically routes requests to other web servers.

### WEB SERVICE MANAGEMENT

Another part of the present invention disclosed here is a system and a method for web services management. A Web service is "a software system designed to support interoperable machine-to-machine interaction over a network". Web services are typically provided via application programming interfaces (API) that can be accessed over a network, such as the Internet, and executed on a remote system hosting the requested services. Web services are frequently used to implement architecture according to Service-oriented architecture (SOA) concepts, where the basic unit of communication is a message, rather than an operation. This is often referred to as "message-oriented" services. SOA Web services are supported by most major software vendors and industry analysts. The typical protocols that web services use include Simple Object Access Protocol (SOAP), Representational state transfer (REST) and JavaScript Object Notation (JSON).

Companies can provide third party access to data and application logic via web services, and thus allow third parties to build applications that leverage the capability of different systems without knowing the inner works of these systems. Well known examples of web services include Amazon EC2 API, eBay Web Services and Salesforce.com's web services.

To facilitate the production and consumption of web services, there is a need to meter service usage and measure service quality. Further, there is a need to provide access control and reporting. Such functionalities are typically built by (or purchased by) web service producers and deployed over a "fixed capacity" infrastructure. Building, deploying, and managing such functionalities is expensive and time consuming. Further, using a "fixed capacity" infrastructure does not scale well. The present invention provides a much simpler and more cost effective solution. The web service management system of the present invention is a network service based on a cloud routing network. The cloud routing network is a virtual network comprising of nodes distributed at different locations over the underlying physical network. These nodes provide traffic interception, traffic redirection, traffic processing, and monitoring services.

Referring to FIG. 15, web services are running on server A80 and an API A70 provides access to these web services. The API may be SOAP, REST, or JSON among others. The web service is accessible via network A90. Traffic Management Service A20 intercepts and redirects requests from clients A00, A10, A12 to traffic processing units A32, A34, A38, A40, A44. When client A00 (a web service consumer) tries to access the web service A80, the cloud routing network redirects the call to "the closest TPU node" A32. TPU A32 routes the call to TPU A40 via some optimized path and transport. Finally, A40 delivers the call to the target web service. Likewise, calls from client A10 are routed through TPU A34 and TPU A44 before being delivered to the target web service provider. However, requests from unwanted clients A12 are directed to TPU A38 and discarded because TPU A38 determines such requests as "unwanted traffic".

While web services calls are being routed within the cloud routing network, the web services management application performs various processing, such as access control, usage metering, rule and policy enforcement, denial of service mitigation and reporting, among others. FIG. 16 shows one embodiment of the web services management workflow. First, a customer configures the DNS record of the web service provider to point to custom DNS servers provided by the web service management system (781). When a web service consumer (client) makes a call to the web service (782), it results in a DNS hostname lookup query. The custom DNS server receives the DNS hostname query and redirects calls from the web service consumer to an optimal router node and selects an optimal web service server node("web service provider") as the target server node to serve the request (783). An optimal TPU node is selected to process the call and the TPU node inspects the call. The TPU node performs access control check to see whether this call is allowed (784) . If not, the call is rejected and the event is logged (785). Next, the TPU node performs security check to see if this call violates security rules and policies (786). For example, it checks to see if the call contains proper security token. It consults the global data repository in DPS A60 to calculate the access rate from this specific client to check whether access rate limit is reached. It consults the global data repository to check whether the client is on a black list: It consults the global data repository to check whether this call is part of a denial of service attack, among others. The call is discarded if security check failed (785). The TPU node logs the web services usage. If necessary, the TPU node routes the call to another TPU node. The other TPU node may repeat some of the above procedures. Finally, the call reaches the target web service (788). A response is received and routed back to the client. The TPU nodes collects call related metrics and updates the global data repository (788). The TPU nodes update the global data repository in DPS A60 about billing information.

The above mentioned examples are merely for the purpose of illustrating the present invention. As one skilled in the art will appreciate, many combinations or variants, such as different kinds of "management", different steps of "management" and different protocols, are all within the scope of the present invention as defined by the claims.

### EMAIL SECURITY AND ARCHIVING

Another part of the present invention disclosed here is a system and method for email security and archiving. There are a variety of email security and archiving solutions available in the prior art. The present invention is different because it is based on a cloud routing network. Because the present invention is based on a cloud routing network, it is able to provide much better performance, and more cost effective scalability than prior arts. Importantly, the subject invention is non-intrusive to customers and users. Customers do not need to purchase hardware or install software in order to adopt the service. Users do not need to change anything in order to receive the benefits of the service. Further, as a hosted service, the present invention allows a service provider to continuously collect data and use collected data to non-disruptively enhance the service. For example, the service provider can stop a new email virus from spreading as soon as the service provider learns about the virus, which is much quicker than requiring each customer to learn about the virus and taking actions on their own.

The email security and archiving system of the present invention ("email security system") is an application based on a cloud routing network. It includes the following components:
A. A distributed network that provides traffic redirection, traffic routing, and monitoring services;
B. An application programming interface (API) provided by the above mentioned distributed network that enables application developers to write applications using services provided by the distributed network;
C. Email security and archiving application that leverages the above mentioned API to manage emails by providing filtering, anti-spam, and archiving services;

When a client sends an email to an email address that belongs to one of the managed email servers, the traffic redirection module of the present invention redirects the email message to a node within the email management system. This node performs routing, path selection, transport selection before delivering the message to the target email server node. However, before it performs the routing activity as part of the cloud routing network, it invokes the email security application C30 to process the message first, shown in FIG. 17. The following lists some of the message processing examples:
A. Email sender IP black listing: Email spammers typically send spam emails from a list of IP addresses. The email security system adds an IP address to its "blacklist" as soon as it identifies the IP address is a spam IP address, effectively stopping the spam immediately;
B. Email filtering: Customers can configure email filtering rules via some management user interface, for example, taking a certain action on a certain message that meets certain criteria. These filtering rules are applied automatically when an email message arrives;
C. Anti-virus: When an email message arrives, the email security system scans the email message content and attachment using known virus patterns. When a message is detected to contain virus, the email security system stops delivering the message, logs the event and reports it to administration. Given that the system is a hosted service, it can continuously update its virus pattern database and thus continuously enhance its service quality;
D. Email archiving: per customer configuration, the email security system archives email messages into its storage repositories. Further, it can offer search service on archived messages to offer faster access to information;
E. Email metrics and reporting: the email security system collects necessary email metrics and generates reports of interest to customers;

The above list is not exhaustive and is merely for illustration purpose. FIG. 17 shows an embodiment of the email security system of the present invention. C70 represents the customer's email servers under management by an email security and archiving system of the present invention. These email servers ("managed email server") may be running email server software such as Microsoft Exchange Server, IBM Lotus Notes software, Novell GroupWise, Yahoo's Zimbra email server and so on. The present invention is not limited to any particular email server software.

FIG.18 shows the workflow of processing an incoming email message in one embodiment of the subject email security system. First, customers configure their usage of the email security system by setting up the redirection of email messages to the email security system (881). Using a DNS-based traffic redirection mechanism as an example, customers need to configure the DNS record of their email servers to point to DNS servers provided by the email security system. This configuration may be done by specifying the name server or specifying the "MX" field in a DNS record. Once the above configuration is effective, email messages sent to the target email servers (882) are redirected to the email security system before being delivered to the target email servers (883). Upon receiving an email message, the email security system performs the following checks:
A. Is the sender IP address blacklisted? (884)
B. Is the receiver email address blacklisted? (885)
C. Is the message a spam email? (888)
D. Does the message contain virus?
E. Does the message require any filter processing?
F. Does the message require archiving?

In performing the above checks, the email security system may consult its own databases and business rules. Depending on the answer to the above questions, it performs the corresponding actions. If the answer to any of the above mentioned checks is positive, the system rejects the mail message (886) and logs the message (887). Finally, after the above processing, if applicable, the message is routed to the target email server for delivery (889). The mail usage is metered, the metrics is logged (890) and the message is archived (891).

The advantages of the present invention include the following. It is very easy to adopt it because it is non-intrusive to customers and users. Customers do not need to purchase hardware or install software in order to adopt the service. Users do not need to change anything in order to receive the benefits of the service. As a hosted service, the present invention allows a service provider to continuously collect data and use collected data to continuously enhance the service. For example, the service provider can stop a new email virus from spreading as soon as the service provider learns about the virus, long before customers even hear about the virus. As an application based on a cloud routing network, the service has "auto scaling" capability built in to deliver performance and scalability in a cost effective manner. As an application based on a cloud routing network, it also provides load balancing and failover capabilities. For example, if one email server is down, the system automatically routes messages to other email servers.

Several embodiments of the present invention have been described. Nevertheless, it will be understood that various modifications may be made without departing from the scope of the invention as defined by the following claims.

## Claims

1. A method for providing access management and security protection to an HTTP service, comprising:
providing an HTTP - service wherein said HTTP- service is hosted at one or more HTTP servers and is accessible to clients via a first network and is configured to receive HTTP requests from one or more clients and provide HTTP responses to said one or more clients, wherein each HTTP request comprises a request uniform resource locator, URL, cookies, request header fields and request body;
providing an intermediary component configured to connect to said HTTP servers and to said clients via said first network, wherein said intermediary component comprises a traffic management system TMS and a traffic processing system TPS and wherein said TMS manages HTTP requests originating from said clients and targeting said HTTP servers and redirects said HTTP requests to said intermediary component and wherein said TPS comprises a plurality of traffic processing nodes connected via a second network and wherein said TPS scales its processing capacity and network capacity by dynamically adjusting the number of traffic processing nodes;
redirecting HTTP network traffic targeted to access said HTTP service via said first network to a traffic processing node of said TPS via said TMS;
inspecting, processing and cleaning the URL, cookies, request header fields and request body of each HTTP request comprised in said redirected HTTP network traffic by said traffic processing node; and
routing only redirected HTTP network traffic that comprises HTTP requests that have been inspected, processed, cleaned and approved by said traffic processing node to said HTTP service.

2. The method of claim 1, wherein said second network comprises an overlay network superimposed over said first network.

3. The method of one of the preceding claims, wherein said processing and cleaning of said redirected network traffic comprises at least one of client throttling, geographic throttling, rate throttling, modifying HTTP request URL, query, cookie, header fields and request body, discarding the HTTP request, returning an HTTP error message, and returning a pre-defined HTTP response.

4. The method of one of the preceding claims, wherein said inspecting comprises inspecting said redirected HTTP network traffic for presence of malware, spyware, virus, adult content, worm, denial of service attack, injection attack or information scanning attack, and upon confirmation of the presence of malware, spyware, virus, adult content, worm, denial of service attack, injection attack or information scanning attack, preventing said redirected HTTP network traffic from accessing said HTTP service.

5. The method of one of the preceding claims, further comprising applying access rules via said traffic processing nodes and applying security rules via said traffic processing nodes to said redirected HTTP network traffic in real time, and wherein said access rules and said security rules comprise aggregates of access rules and security rules applied to a plurality of HTTP services.

6. The method of claim 5 further comprising monitoring network traffic parameters comprising at least one of network traffic volume, bandwidth consumption information, link congestion level, link latency, request URL, usage or origin IP.

7. The method of claim 6 wherein said intermediary component further comprises a data processing system (332, 710) comprising one or more databases storing said network traffic data parameters, said aggregate access rules and security rules and wherein said method further comprises sharing said network traffic data parameters, said aggregate access rules and security rules among said plurality of HTTP services.

8. The method of claim 7 further comprises analyzing said stored data and determining key network metrics required for decision making.

9. The method of one of the preceding claims, further comprising directing HTTP responses from said HTTP service to said traffic processing node and inspecting, cleaning and processing said HTTP responses by said traffic processing node before returning said HTTP responses to said clients.

10. The method of one of the preceding claims, wherein said redirecting of HTTP network traffic comprises one of setting DNS "NS" record, setting DNS CNAME record, setting "A" record, hosting DNS records at a DNS system that resolves hostname of said HTTP service to traffic processing nodes, setting client side proxy configurations, or network address translation.

11. The method of one of the preceding claims, wherein said second network comprises virtual machines nodes.

12. The method of one of the preceding claims, wherein said HTTP service comprises one of a web application, web service or email service.

13. The method of one of the preceding claims, further comprising providing an access control gateway, and wherein said access control gateway is configured to provide access control and security control to said HTTP service by allowing only HTTP network traffic from said traffic processing nodes to access said HTTP service.

14. The method of claim 13 wherein said access control gateway comprises a router configured to allow only HTTP network traffic with a specific signature to pass through, and wherein said specific signature comprises one of an IP address or token.

15. The method of one of the claims 13 to 14 wherein said access control gateway comprises a private communication channel between said HTTP service and said second network.

16. A system for providing access management and security protection to an HTTP service, comprising:
a first network providing network connections between one or more HTTP servers and a plurality of clients;
an HTTP service wherein said HTTP service is hosted at said one or more HTTP servers and is accessible to said clients via said first network and is configured to receive HTTP requests from one or more clients and provide HTTP responses to said one or more clients, wherein each HTTP request comprises a request uniform resource locator URL, cookies, request header fields and request body;
an intermediary component configured to connect to said HTTP servers and to said clients via said first network, wherein said intermediary component comprises a traffic management system TMS and a traffic processing system TPS and wherein said TMS manages HTTP requests originating from said clients and targeting said HTTP servers and redirects said HTTP requests to said intermediary component and wherein said TPS comprises a plurality of traffic processing nodes connected via a second network and wherein said TPS scales its processing capacity and network capacity by dynamically adjusting the number of traffic processing nodes;
means for redirecting HTTP network traffic targeted to access said HTTP service via said first network to a traffic processing node of said TPS via said TMS;
means for inspecting, means for processing and means for cleaning the URL, cookies, request header fields and request body of each HTTP request comprised in said redirected HTTP network traffic by said traffic processing node; and
means for routing only redirected HTTP network traffic that comprises HTTP requests that have been inspected, processed, cleaned and approved by said traffic processing node to said HTTP service.

## Patentansprüche

1. Verfahren zum Bereitstellen von Zugriffsverwaltung und Sicherheitsschutz für einen HTTP-Service, mit:
Bereitstellen eines HTTP-Services, wobei der HTTP-Service in einem oder mehreren HTTP-Servern gehostet ist und für Clients über ein erstes Netzwerk zugänglich ist und konfiguriert ist, um HTTP-Anfragen von einem oder mehreren Clients zu empfangen und HTTP-Antworten an die einen oder mehreren Clients zu liefern, wobei jede HTTP-Anfrage eine Internetadresse, URL, Cookies, Anfragekopffelder und Anfragekörper umfasst;
Bereitstellen einer zwischengeschalteten Komponente, die konfiguriert ist, um sich mit den HTTP-Servern und den Clients über das erste Netzwerk zu verbinden, wobei die zwischengeschaltete Komponente ein Verkehrsleitsystem TMS und ein Verkehrsaufbereitungssystem TPS umfasst und wobei das TMS HTTP-Anfragen verwaltet, die von den Clients stammen und an die HTTP-Server gerichtet sind und die HTTP-Anfragen an die zwischengeschaltete Komponente umleitet und wobei das TPS eine Vielzahl von Verkehrsverarbeitungsknoten umfasst, die über ein zweites Netzwerk verbunden sind und wobei das TPS seine Verarbeitungskapazität und Netzwerkkapazität durch dynamisches Anpassen der Anzahl von Verkehrsverarbeitungsknoten skaliert;
Umleitung von HTTP-Netzwerkverkehr, der darauf abzielt, auf den HTTP-Service über das erste Netzwerk auf einen Verkehrsverarbeitungsknoten des TPS über das TMS zuzugreifen;
Prüfen, Verarbeiten und Reinigen der URL, Cookies, Anfragekopffeldern und Anfragenkörper jeder HTTP-Anfrage, die im umgeleiteten HTTP-Netzwerkverkehr enthalten ist, durch den Verkehrsverarbeitungsknoten; und Weiterleitung nur von umgeleitetem HTTP-Netzwerkverkehr, der HTTP-Anfragen umfasst, die durch den Verkehrsverarbeitungsknoten überprüft, verarbeitet, gereinigt und genehmigt wurden, zum HTTP-Service.

2. Verfahren nach Anspruch 1, wobei das zweite Netzwerk ein Überlagerungsnetzwerk umfasst, das über dem ersten Netzwerk liegt.

3. Verfahren nach einem der vorhergehenden Ansprüche, wobei das Verarbeiten und Reinigen des umgeleiteten Netzwerkverkehrs mindestens eines aus Clients Drosseln, geographisches Drosseln, Frequenzdrosseln, Modifizieren der HTTP-Anfrage-URL, der Anfrage, des Cookies, der Dateikopffelder und der Anfragekörper, Verwerfen der HTTP-Anfrage, Rücksenden einer HTTP-Fehlermeldung und Rücksenden einer vorbestimmten HTTP-Antwort umfasst.

4. Verfahren nach einem der vorhergehenden Ansprüche, wobei die Überprüfung das Überprüfen des umgeleiteten HTTP-Netzwerkverkehrs auf Vorhandensein eines Schadprogramms, von Spyware, eines Viruses, nicht jugendfreier Inhalte, Würmer, DOS-Angriffe, Injektionsangriffe oder Informationsscanangriffe umfasst, um den umgeleiteten HTTP-Netzwerkverkehr von dem Zugriff auf den HTTP-Service abzuhalten.

5. Verfahren nach einem der vorhergehenden Ansprüche, ferner mit Anwenden von Zugriffsregeln über die Verkehrsverarbeitungsknoten und Anwenden von Sicherheitsregeln über die Verkehrsverarbeitungsknoten zum umgeleiteten HTTP-Netzwerkverkehr in Echtzeit, wobei die Zugangsregeln und die Sicherheitsregeln Anhäufungen von Zugangsregeln und Sicherheitsregeln umfassen, die auf eine Vielzahl von HTTP-Servicen angewendet werden.

6. Verfahren nach Anspruch 5 ferner mit Überwachungsnetzwerkverkehrsparametern, die mindestens eines aus Netzwerkverkehrsvolumen, Bandbreitenverbrauchsinformation, Linküberlastungsniveau, Linkwartezeit, Anfrage-URL, Gebrauchs- oder Herkunfts-IP umfassen.

7. Verfahren nach Anspruch 6, wobei die zwischengeschaltete Komponente ferner ein Datenverarbeitungssystem (332, 710) umfasst, das eine oder mehrere Datenbanken umfasst, die die Netzwerkverkehrsdatenparameter, die angehäuften Zugangsregeln und Sicherheitsregeln speichert, wobei das Verfahren ferner die Mitbenutzung der Netzwerkverkehrsdatenparameter, die angehäuften Zugangsregeln und Sicherheitsregeln unter der Vielzahl an HTTP-Servicen umfasst.

8. Verfahren nach Anspruch 7, das ferner das Analysieren der gespeicherten Daten und das Bestimmen der Schlüsselnetzwerkmetriken umfasst, die für die Entscheidungsfindung erforderlich sind.

9. Verfahren nach einem der vorhergehenden Ansprüche, das ferner das Leiten von HTTP-Antworten vom HTTP-Service zum Verkehrsverarbeitungsknoten und das Überprüfen, Reinigen und Verarbeiten der HTTP-Antworten durch den Verkehrsverarbeitungsknoten bevor die HTTP-Antworten zu den Clients zurückgeschickt werden, umfasst.

10. Verfahren nach einem der vorhergehenden Ansprüche, wobei das Umleiten des HTTP-Netzwerkverkehrs eines aus dem Setzen eines DNS "NS"-Records, dem Setzen eines DNS CNAME-Records, dem Setzen eines "A" Records, dem Hosting von DNS Records in einem DNS System, das den Hostnamen des HTTP-Services zu den Verkehrsverarbeitungsknoten auflöst, Setzen der Client-seitigen Proxy-Konfigurationen oder Netzwerkadressenübersetzung umfasst.

11. Verfahren nach einem der vorhergehenden Ansprüche, wobei das zweite Netzwerk virtuelle Maschinenknoten umfasst.

12. Verfahren nach einem der vorhergehenden Ansprüche, wobei der HTTP-Service eine Webanwendung, einen Webservice oder einen e-mail Service umfasst.

13. Verfahren nach einem der vorhergehenden Ansprüche, ferner mit Bereitstellen eines Zugriffskontrollnetzkopplers und wobei der Zugriffskontrollnetzkoppler konfiguriert ist, um Zugriffskontrolle und Sicherheitskontrolle auf den HTTP-Service bereitzustellen, indem nur HTTP-Netzwerkverkehr von den Verkehrsverarbeitungsknoten erlaubt wird, auf den HTTP-Service zuzugreifen.

14. Verfahren nach Anspruch 13, wobei der Zugriffskontrollnetzkoppler einen Router umfasst, der konfiguriert ist, um nur HTTP-Netzwerkverkehr mit einer besonderen Signatur zu erlauben zu passieren und wobei die besondere Signatur eine IP-Adresse oder -Token umfasst.

15. Verfahren nach einem der Ansprüche 13 bis 14, wobei der Zugriffskontrollnetzkoppler einen privaten Kommunikationskanal zwischen dem HTTP-Service und dem zweiten Netzwerk umfasst.

16. System zum Bereitstellen von Zugriffsverwaltung und Sicherheitsschutz für einen HTTP-Service, mit:
einem ersten Netzwerk, das Netzwerkverbindungen zwischen einem oder mehreren HTTP-Servern und einer Vielzahl von Clients bereitstellt;
einem HTTP-Service, wobei der HTTP-Service in dem einem oder mehreren HTTP-Servern gehostet ist und für Clients über ein erstes Netzwerk zugänglich ist und konfiguriert ist, um HTTP-Anfragen von einem oder mehreren Clients zu empfangen und HTTP-Antworten an die einen oder mehreren Clients zu liefern, wobei jede HTTP-Anfrage eine Internetadresse URL, Cookies, Anfragekopffelder und Anfragekörper umfasst;
einer zwischengeschalteten Komponente, die konfiguriert ist, um sich mit den HTTP-Servern und den Clients über das erste Netzwerk zu verbinden, wobei die zwischengeschaltete Komponente ein Verkehrsleitsystem TMS und ein Verkehrsaufbereitungssystem TPS umfasst und wobei das TMS HTTP-Anfragen verwaltet, die von den Clients stammen und an die HTTP-Server gerichtet sind und die HTTP-Anfragen an die zwischengeschaltete Komponente umleitet und wobei das TPS eine Vielzahl von Verkehrsverarbeitungsknoten umfasst, die über ein zweites Netzwerk verbunden sind und wobei das TPS seine Verarbeitungskapazität und Netzwerkkapazität durch dynamisches Anpassen der Anzahl von Verkehrsverarbeitungsknoten skaliert;
Mitteln zur Umleitung von HTTP-Netzwerkverkehr, der darauf abzielt, um auf den HTTP-Service über das erste Netzwerk auf einen Verkehrsverarbeitungsknoten des TPS über das TMS zuzugreifen;
Mitteln zum Prüfen, Mitteln zum Verarbeiten und Mitteln zum Reinigen der URL, Cookies, Anfragekopffelder und Anfragekörper jeder HTTP-Anfrage, die im umgeleiteten HTTP-Netzwerkverkehr enthalten ist, durch den Verkehrsverarbeitungsknoten;
Mitteln zur Weiterleitung nur von umgeleitetem HTTP-Netzwerkverkehr, der HTTP-Anfragen umfasst, die durch den Verkehrsverarbeitungsknoten überprüft, verarbeitet, gereinigt und genehmigt wurden, zum HTTP-Service.

## Revendications

1. Procédé pour fournir une gestion d'accès et une protection de sécurité à un service HTTP, comprenant:
la mise à disposition d'un service HTTP dans lequel ledit service HTTP est hébergé au niveau d'un ou de plusieurs serveurs HTTP et est accessible aux clients via un premier réseau et est configuré pour recevoir des demandes HTTP provenant d'un ou de plusieurs clients et pour fournir des réponses HTTP audit ou auxdits clients, dans lequel chaque demande HTTP comprend un localisateur uniforme de ressources de demande, des URL, des cookies, des champs d'en-tête de demande et des corps de texte de demande;
la mise à disposition d'un composant intermédiaire configuré pour réaliser la connexion auxdits serveurs HTTP et auxdits clients via ledit premier réseau, dans lequel ledit composant intermédiaire comprend un système de gestion du trafic TMS et un système de traitement du trafic TPS et dans lequel ledit TMS gère les demandes HTTP provenant desdits clients et ciblant lesdits serveurs HTTP et redirige lesdites demandes HTTP audit composant intermédiaire et dans lequel ledit TPS comprend une pluralité de noeuds de traitement du trafic connectés via un second réseau et dans lequel ledit TPS échelonne sa capacité de traitement et sa capacité de réseau en réalisant un réglage dynamique du nombre de noeuds de traitement du trafic;
la redirection du trafic de réseau HTTP ciblé pour accéder audit service HTTP via ledit premier réseau conduisant à un noeud de traitement du trafic dudit TPS via ledit TMS;
l'inspection, le traitement et le nettoyage de l'URL, des cookies, des champs d'en-tête de demande et du corps de texte de demande de chaque demande HTTP comprise dans ledit trafic de réseau HTTP redirigé par ledit noeud de traitement du trafic; et
le routage du seul trafic de réseau HTTP redirigé qui comprend les demandes HTTP inspectées, traitées, nettoyées et approuvées par ledit noeud de traitement du trafic conduisant audit service HTTP.

2. Procédé selon la revendication 1, dans lequel ledit second réseau comprend un réseau en superposition superposé audit premier réseau.

3. Procédé selon l'une quelconque des revendications précédentes, dans lequel ledit traitement et ledit nettoyage dudit trafic de réseau redirigé comprend au moins un lissage des clients, un lissage géographique, un lissage du débit, une modification de l'URL de demande HTTP, de l'interrogation, du cookie, des champs d'en-tête et du corps de texte de demande, la suppression de la demande HTTP, le retour d'un message d'erreur HTTP et le retour d'une réponse HTTP prédéfinie.

4. Procédé selon l'une quelconque des revendications précédentes, dans lequel ladite inspection comprend l'inspection dudit trafic de réseau HTTP redirigé pour vérifier la présence de logiciel malveillant de type malware, de logiciel espion de type spyware, de virus, de contenu pour adultes, de ver informatique, d'attaque par refus de service, d'attaque par injection ou d'attaque par balayage d'informations et, à confirmation de la présence de logiciel malveillant de type malware, de logiciel espion de type spyware, de virus, de contenu pour adultes, de ver informatique, d'attaque par refus de service, d'attaque par injection ou d'attaque par balayage d'informations, l'empêchement dudit trafic de réseau HTTP redirigé d'accéder audit service HTTP.

5. Procédé selon l'une quelconque des revendications précédentes, comprenant en outre l'application audit trafic de réseau HTTP redirigé en temps réel de règles d'accès via lesdits noeuds de traitement du trafic et l'application de règles de sécurité via lesdits noeuds de traitement du trafic et dans lequel lesdites règles d'accès et lesdites règles de sécurité comprennent l'agrégation des règles d'accès et des règles de sécurité appliquées à une pluralité de services HTTP.

6. Procédé selon la revendication 5, comprenant en outre la surveillance des paramètres de trafic de réseau comprenant au moins un élément parmi le volume de trafic de réseau, les informations de consommation de bande passante, le niveau de congestion de la liaison, la latence de la liaison, l'URL de demande, l'IP d'usage ou d'origine.

7. Procédé selon la revendication 6, dans lequel ledit composant intermédiaire comprend en outre un système de traitement de données (332, 710) comprenant une ou plusieurs bases de données stockant lesdits paramètres de données de trafic de réseau, ladite agrégation de règles d'accès et de règles de sécurité et dans lequel ledit procédé comprend en outre le partage desdits paramètres de données de trafic de réseau, de ladite agrégation de règles d'accès et de règles de sécurité parmi ladite pluralité de services HTTP.

8. Procédé selon la revendication 7, comprenant en outre l'analyse desdites données mémorisées et la détermination des principaux paramètres du réseau nécessaires à la prise de décision.

9. Procédé selon l'une quelconque des revendications précédentes, comprenant en outre l'envoi des réponses HTTP provenant dudit service HTTP audit noeud de traitement du trafic et l'inspection, le nettoyage et le traitement desdites réponses HTTP par ledit noeud de traitement du trafic avant de renvoyer lesdites réponses HTTP auxdits clients.

10. Procédé selon l'une quelconque des revendications précédentes, dans lequel ladite redirection du trafic de réseau HTTP comprend un élément parmi le paramètre DNS intitulé enregistrement «NS» («NS» record), le paramètre DNS intitulé enregistrement CNAME (CNAME record), le paramètre intitulé enregistrement « A » (« A » record), l'hébergement des enregistrements DNS au niveau d'un système DNS traduisant le nom d'hôte dudit service HTTP en noeuds de traitement du trafic, le paramètre des configurations de proxy du côté du client ou la traduction d'adresse de réseau.

11. Procédé selon l'une quelconque des revendications précédentes, dans lequel ledit second réseau comprend des noeuds de machines virtuelles.

12. Procédé selon l'une quelconque des revendications précédentes, dans lequel ledit service HTTP comprend un élément parmi une application web, un service web ou un service de courrier électronique.

13. Procédé selon l'une quelconque des revendications précédentes, comprenant en outre le fait de fournir une passerelle de contrôle d'accès et dans lequel ladite passerelle de contrôle d'accès est configurée pour fournir un contrôle d'accès et un contrôle de sécurité audit service HTTP en permettant seulement au trafic de réseau HTTP provenant desdits noeuds de traitement du trafic d'accéder audit service HTTP.

14. Procédé selon la revendication 13, dans lequel ladite passerelle de contrôle d'accès comprend un routeur configuré pour ne permettre qu'au trafic de réseau HTTP avec une signature spécifique de passer et dans lequel ladite signature spécifique comprend un élément parmi une adresse IP ou un jeton.

15. Procédé selon l'une quelconque des revendications 13 à 14, dans lequel ladite passerelle de contrôle d'accès comprend un canal de communication privé entre ledit service HTTP et ledit second réseau.

16. Système pour fournir une gestion d'accès et une protection de sécurité à un service HTTP, comprenant:
un premier réseau fournissant des connexions de réseau entre un ou plusieurs serveurs HTTP et une pluralité de clients;
un service HTTP dans lequel ledit service HTTP est hébergé au niveau dudit ou desdits serveurs HTTP et est accessible auxdits clients via ledit premier réseau et est configuré pour recevoir les demandes HTTP provenant d'un ou de plusieurs clients et pour fournir des réponses HTTP audit ou auxdits clients, dans lequel chaque demande HTTP comprend un localisateur uniforme de ressources de demande URL, des cookies, des champs d'en-tête de demande et un corps de texte de demande;
un composant intermédiaire configuré pour réaliser la connexion auxdits serveurs HTTP et auxdits clients via ledit premier réseau, dans lequel ledit composant intermédiaire comprend un système de gestion du trafic TMS et un système de traitement du trafic TPS et dans lequel ledit TMS gère les demandes HTTP provenant desdits clients et ciblant lesdits serveurs HTTP et redirige lesdites demandes HTTP audit composant intermédiaire et dans lequel ledit TPS comprend une pluralité de noeuds de traitement du trafic connectés via un second réseau et dans lequel ledit TPS échelonne sa capacité de traitement et sa capacité de réseau en réalisant un réglage dynamique du nombre de noeuds de traitement du trafic;
des moyens pour rediriger le trafic de réseau HTTP ciblé pour accéder audit service HTTP via ledit premier réseau conduisant à un noeud de traitement du trafic dudit TPS via ledit TMS;
des moyens d'inspection, des moyens de traitement et des moyens de nettoyage de l'URL, des cookies, des champs d'en-tête de demande et du corps de texte de demande de chaque demande HTTP comprise dans ledit trafic de réseau HTTP redirigé par ledit noeud de traitement du trafic; et
des moyens de routage du seul trafic de réseau HTTP redirigé qui comprend les demandes HTTP inspectées, traitées, nettoyées et approuvées par ledit noeud de traitement du trafic conduisant audit service HTTP.
